(19) **Europäisches Patentamt / European Patent Office / Office européen des brevets**

(11) **EP 4 542 945 A1**

(12) **EUROPEAN PATENT APPLICATION**
published in accordance with Art. 153(4) EPC

(43) Date of publication:
**23.04.2025 Bulletin 2025/17**

(21) Application number: **23823904.0**

(22) Date of filing: **12.06.2023**

(51) International Patent Classification (IPC):
$H04L\ 27/26$ (2006.01)     $H04B\ 7/0456$ (2017.01)
$H04W\ 28/06$ (2009.01)     $H04W\ 28/18$ (2009.01)
$H04W\ 72/02$ (2009.01)     $H04W\ 72/20$ (2023.01)

(52) Cooperative Patent Classification (CPC):
H04B 7/0456; H04L 27/26; H04W 28/06;
H04W 28/18; H04W 72/02; H04W 72/20

(86) International application number:
**PCT/JP2023/021793**

(87) International publication number:
**WO 2023/243614 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.06.2022 JP 2022095920
30.09.2022 JP 2022158782**

(71) Applicant: **Panasonic Intellectual Property
Corporation
of America
Torrance, CA 90504 (US)**

(72) Inventors:
• **YAMAMOTO, Tetsuya**
  **Kadoma-shi, Osaka 571-0057 (JP)**
• **SUZUKI, Hidetoshi**
  **Kadoma-shi, Osaka 571-0057 (JP)**

(74) Representative: **Grünecker Patent- und
Rechtsanwälte
PartG mbB
Leopoldstraße 4
80802 München (DE)**

(54) **TERMINAL, BASE STATION, AND COMMUNICATION METHOD**

(57)     This terminal is provided with: a control circuit which, when dynamic switching is set between a first transmission waveform for an uplink signal and a second transmission waveform having a greater data size than the first transmission waveform, determines a field size of control information on the basis of a field size in the case where the second transmission waveform is set; and a reception circuit which receives the control information on the basis of the field size.

**200**

FIG. 37

EP 4 542 945 A1

EP 4 542 945 A1

## Description

Technical Field

The present disclosure relates to a terminal, a base station, and a communication method.

Background Art

In recent years, a dramatic growth of the Internet of Things (IoT) has been expected with the expansion and diversification of wireless services as a background. The utilization of mobile communication has been expanding to not only information terminals such as smartphones, but also all fields such as automobiles, houses, home electric appliances, and industrial equipment. In order to support the diversification of services, it is essential not only to increase the system capacity, but also to significantly enhance the performance and functionality of mobile communication systems for various requirements such as increasing the number of connected devices and low latency. The 5th generation mobile communication system (5G) has features such as enhanced mobile broadband (eMBB), massive machine type communication (mMTC), and ultra reliable and low latency communication (URLLC), and provides flexible radio communication in response to a wide variety of needs by utilizing the features.

The 3rd Generation Partnership Project (3GPP) as an international standardizing body has been specifying New Radio (NR) as one of 5G radio interfaces.

Citation List

Non-Patent Literature (hereinafter referred to as "NPL")

NPL 1
3GPP TS38.104, "NR Base Station (BS) radio transmission and reception (Release 15)," March 2021.
NPL 2
RP-202928, "New WID on NR coverage enhancements," China Telecom, December 2020.
NPL 3
RP-220937, "Revised WID on Further NR coverage enhancements," China Telecom, March 2022.
NPL 4
3GPP TS38.211, "NR Physical channels and modulation (Release 17)," March 2022.
NPL 5
3GPP TS38.212, "NR Multiplexing and channel coding (Release 17)," March 2022.
NPL 6
3GPP TS38.213, "NR Physical layer procedures for control (Release 17)," March 2022.
NPL 7
3GPP TS38.214, "NR Physical layer procedures for data (Release 17)," March 2022.

Summary of Invention

Further consideration is required for the transmission signal used in NR.

One non-limiting and exemplary embodiment facilitates providing a terminal, a base station, and a communication method each capable of improving the reception performance of a signal in the uplink.

A terminal according to an exemplary embodiment of the present disclosure includes: control circuitry, which, in operation, determines, in a case where dynamic switching between a first transmission waveform of an uplink signal and a second transmission waveform of the uplink signal, where the second transmission waveform has a greater data size than the first transmission waveform, is configured, a field size of control information based on the field size in a case where the second transmission waveform is configured; and reception circuitry, which, in operation, receives the control information based on the field size.

Advantageous Effects of Invention

According to an exemplary embodiment of the present disclosure, it is possible to transmit a transmission signal appropriately.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 illustrates a method for determining a transmission waveform of PUSCH in NR up to Release 17;
FIG. 2 is a mapping table of the Precoding information and number of layers field in Case 3-1;
FIG. 3 is a mapping table of a Precoding information and number of layers field in Case 3-2;
FIG. 4 is a mapping table of the Precoding information and number of layers field in Case 4-1;
FIG. 5 is a mapping table of the Precoding information and number of layers field in Case 4-2;
FIG. 6 is a mapping table of the Precoding information and number of layers field in Case 4-3;
FIG. 7 is a mapping table of the Precoding information and number of layers field in Case 5-1;
FIG. 8 is a mapping table of the Precoding information and number of layers field in Case 5-2;
FIG. 9 is a mapping table of the Precoding information and number of layers field in Case 6;
FIG. 10 is a mapping table of an Antenna ports field for DFT-s-OFDM in Case A1;
FIG. 11 is a mapping table of an Antenna ports field for CP-OFDM in Case A1 (the number of transmission layers: 1);
FIG. 12 is a mapping table of the Antenna ports field for CP-OFDM in Case A1 (the number of transmission layers: 2);
FIG. 13 is a mapping table of the Antenna ports field for CP-OFDM in Case A1 (the number of transmission layers: 3);
FIG. 14 is a mapping table of the Antenna ports field for CP-OFDM in Case A1 (the number of transmission layers: 4);
FIG. 15 is a mapping table of the Antenna ports field for DFT-s-OFDM in Case A2;
FIG. 16 is a mapping table of the Antenna ports field for CP-OFDM in Case A2 (the number of transmission layers: 1);
FIG. 17 is a mapping table of the Antenna ports field for CP-OFDM in Case A2 (the number of transmission layers: 2);
FIG. 18 is a mapping table of the Antenna ports field for CP-OFDM in Case A2 (the number of transmission layers: 3);
FIG. 19 is a mapping table of the Antenna ports field for CP-OFDM in Case A2 (the number of transmission layers: 4);
FIG. 20 is a mapping table of an Antenna ports field for CP-OFDM in Case B1 (the number of transmission layers: 1);
FIG. 21 is a mapping table of the Antenna ports field for CP-OFDM in Case B1 (the number of transmission layers: 2);
FIG. 22 is a mapping table of the Antenna ports field for CP-OFDM in Case B1 (the number of transmission layers: 3);
FIG. 23 is a mapping table of the Antenna ports field for CP-OFDM in Case B1 (the number of transmission layers: 4);
FIG. 24 is a mapping table of the Antenna ports field for CP-OFDM in Case B2 (the number of transmission layers: 1);
FIG. 25 is a mapping table of the Antenna ports field for CP-OFDM in Case B2 (the number of transmission layers: 2);
FIG. 26 is a mapping table of the Antenna ports field for CP-OFDM in Case B2 (the number of transmission layers: 3);
FIG. 27 is a mapping table of the Antenna ports field for CP-OFDM in Case B2 (the number of transmission layers: 4);
FIG. 28 is a flowchart;
FIG. 29 illustrates a configuration of a base station;
FIG. 30 illustrates a configuration of a terminal;
FIG. 31 illustrates an NG-RAN architecture;
FIG. 32 illustrates a functional split between NG-RAN and 5GC;
FIG. 33 illustrates an interaction among a UE, a gNB, and an AMF (5GC entity);
FIG. 34 illustrates a use case for 5G NR;
FIG. 35 illustrates a non-roaming reference architecture for 5G NR;
FIG. 36 is a block diagram illustrating an exemplary configuration of a part of base station 100;
FIG. 37 is a block diagram illustrating an exemplary configuration of a part of terminal 200;
FIG. 38 illustrates an exemplary MCS table; and
FIG. 39 illustrates another exemplary MCS table.

Description of Embodiments

Hereinafter, embodiments of the present disclosure will be described in detail with reference to the accompanying drawings.

In NR, in addition to a frequency band of 6 GHz or less (Frequency Range 1 (FR1)) such as mainly 700 MHz to 3.5 GHz band that has been conventionally used for cellular communication systems, a millimeter-wave band (FR2) such as 28 GHz or 39 GHz band capable of ensuring a wide band can be secured is utilized (NPL 1). Further, even in FR1, a frequency band higher than that in Long Term Evolution (LTE) or 3G, such as 3.5 GHz band, may be utilized.

As the frequency band becomes higher, a propagation loss becomes larger and the reception quality deteriorates. Therefore, in NR, it is expected to maintain an appropriate communication quality for a communication area (coverage) as in the conventional radio access technology (RAT) such as LTE and 3G. In 3GPP Release 17 (Rel. 17) and Release 18 (Rel. 18), NR coverage enhancements have been studied (NPLs 2 and 3).

In NR, a terminal (for example, also referred to as user equipment (UE)) transmits and receives data according to the resource allocation indicated by a Layer 1 control signal (for example, Downlink Control Information (DCI)) on a downlink control channel (for example, Physical Downlink Control Channel (PDCCH)) from a base station (for example, also referred to as gNB) or Radio Resource Control (RRC) which is Layer 3 (NPLs 4 to 7).

In the uplink (UL), the terminal transmits an uplink data channel (for example, PUSCH: Physical Uplink Shared Channel) according to the resource allocation (for example, Grant or UL grant) from the base station.

In NR, both Discrete Fourier Transform-spread-orthogonal frequency division multiplexing (DFT-s-OFDM) and Cyclic prefix-OFDM (CP-OFDM) are supported as transmission waveforms for PUSCH transmission. DFT-s-OFDM can secure a wide uplink coverage compared to CP-OFDM because the peak-to-average power ratio (PAPR) of the transmission signal is low and the power utilization efficiency is high. On the other hand, CP-OFDM is a transmission waveform effective for high-efficiency transmission (for example, multiple rank or multiple layer transmission in spatial multiplexing) in a high Signal-to-Interference and Noise power Ratio (SINR) environment due to its high affinity with Multiple-Input Multiple-Output (MIMO).

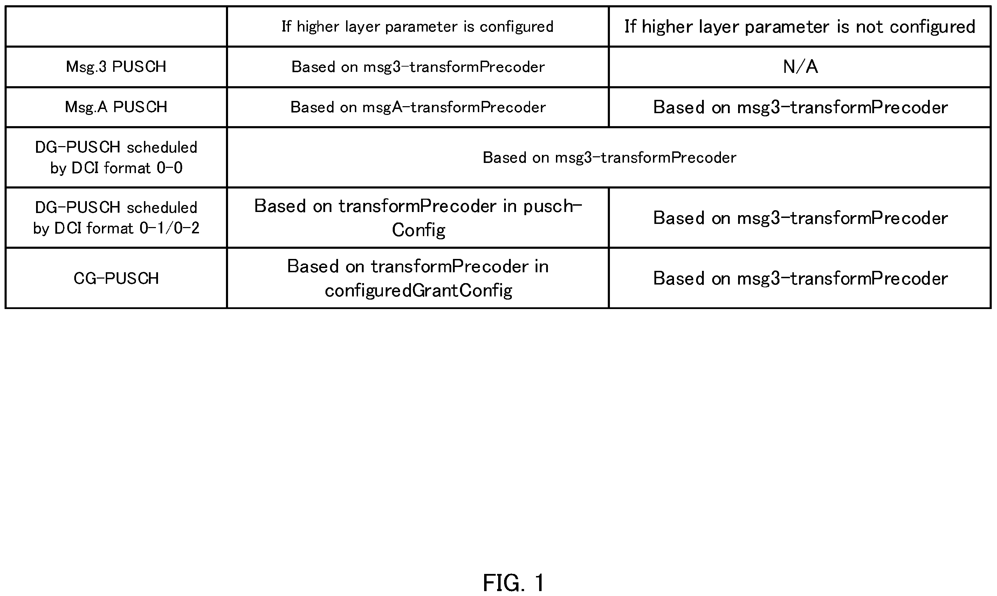

In NR up to Rel. 17, the transmission waveform of PUSCH is semi-statically configured by RRC. FIG. 1 illustrates a method for determining a transmission waveform of PUSCH in NR up to Rel. 17.

The transmission waveform of Message 3 PUSCH is determined based on the parameter msg3-transformPrecoder that is a parameter configured by RRC. The transmission waveform of Message A PUSCH is determined based on a parameter msgA-transformPrecoder configured by RRC. In a case where msgA-transformPrecoder is not configured by RRC, the transmission waveform is determined based on msg3-transformPrecoder.

The transmission waveform of PUSCH (for example, DG-PUSCH: Dynamic Grant-PUSCH) dynamically scheduled by DCI format 0-0 is determined based on msg3-transformPrecoder that is a parameter configured by RRC.

The transmission waveform of PUSCH dynamically scheduled by DCI format 0-1 or DCI format 0-2 is determined based on transformPrecoder that is a parameter included in pusch-Config, which is configured by RRC. In a case where transformPrecoder is not configured by RRC, the transmission waveform is determined based on msg3-transformPrecoder.

The transmission waveform of PUSCH (for example, CG-PUSCH: Configured grant-PUSCH), in which PUSCH is transmitted with the resource allocation indicated by RRC, which is Layer 3, or with a semi-persistent resource allocation by Activation DCI, is determined based on transformPrecoder that is a parameter included in configuredGrantConfig, which is configured by RRC. In a case where transformPrecoder is not configured by RRC, the transmission waveform is determined based on msg3-transformPrecoder.

Further, in NR up to Rel. 17, the number of transmission layers for PUSCH transmission using DFT-s-OFDM is limited to one.

In a general cellular system, it is assumed that DFT-s-OFDM is configured to secure a coverage for a terminal at the cell edge, where uplink coverage improvement is important. However, even in a terminal at the cell edge, there may be a situation where a high SINR is secured and PUSCH is transmitted due to an instantaneous variation in the channel or the interference environment. In such a case, when there is a constraint that the transmission waveform can be only semi-statically configured, it is difficult for a terminal at the cell edge, which has the transmission waveform configured to DFT-s-OFDM, to switch the transmission waveform to CP-OFDM in accordance with an instantaneous variation and perform high-efficiency transmission (for example, multiple layer transmission by MIMO spatial multiplexing), and thus, it is not possible to improve the transmission efficiency of the terminal at the cell edge.

It has been considered to dynamically switch the DCI format for scheduling PUSCH and to dynamically change the transmission waveform of PUSCH.

As one example, DFT-s-OFDM can be configured to PUSCH scheduled by DCI format 0-0, and CP-OFDM can be configured to PUSCH scheduled by DCI format 0-1. However, since DCI format 0-0 only supports allocation for PUSCH with the minimum necessary functions, the constraint on the scheduling of PUSCH using a DFT-s-OFDM transmission waveform is large. Specifically, cross-carrier scheduling in carrier aggregation may not be possible, switching of Bandwidth Part (BWP) may not be possible, precoding or antenna port indication may not be possible, or code block group (CBG)-based retransmission control may not be possible.

As another example, CP-OFDM can be configured to PUSCH scheduled by DCI format 0-0, and DFT-s-OFDM can be configured to PUSCH scheduled by DCI format 0-1. However, DCI format 0-0 supports only one-layer transmission, and PUSCH transmission with a DFT-s-OFDM transmission waveform also supports only one-layer transmission, and thus, high-efficiency transmission with multiple layer transmission using two or more layers is not possible.

As a method for dynamically switching the transmission waveform with a single DCI format (for example, only DCI format 0-1 or DCI format 0-2), it is conceivable to add a field for indicating a transmission waveform to the DCI format. However, the introduction of a field for indicating a transmission waveform leads to an increase in the number of DCI bits. In particular, DCI format 0-2 is DCI designed for URLLC, and it is desirable to enhance the reliability of DCI reception by reducing the number of DCI bits as much as possible, and thus, an increase in the number of DCI bits is not desirable.

It is expected to provide a terminal apparatus, a base station apparatus, a communication method, and a control method each capable of dynamically indicating a transmission waveform of PUSCH with single DCI without adding a field for indicating a transmission waveform to DCI.

Specifically, in a case where dynamic transmission waveform switching is configured to the terminal, the base station determines the field size of each existing DCI based on the field size in a case where the transmission waveform is configured as CP-OFDM, and indicates the transmission waveform of PUSCH by using an existing DCI field. Thus, it is possible to indicate a dynamic transmission waveform without increasing the number of DCI bits.

Dynamic transmission waveform switching for DG-PUSCH with DCI format 0-1 or DCI format 0-2 is enabled via RRC.

After the dynamic transmission waveform switching is enabled, it is necessary to receive DCI in order to actually perform the enabled dynamic transmission waveform switching, and it is necessary to determine the DCI field size in order to receive DCI.

That is, when the dynamic transmission waveform switching is enabled, it is necessary to determine the DCI field size, but the DCI field size is determined based on the size of CP-OFDM, which is larger than the size of DFT-s-OFDM. Note that, in a case where the DCI field size of DFT-s-OFDM is larger than the field size of CP-OFDM, the DCI field size may be determined based on the size of DFT-s-OFDM. The transmission waveform is not limited to DFT-s-OFDM and CP-OFDM, and is applicable to three or more transmission waveforms. In a case where there are three or more transmission waveforms, the transmission waveform is determined based on the largest size, but it is also possible to adopt a transmission waveform that is not the largest size.

In one example, the DCI field includes the following.

·Frequency domain resource assignment
·Precoding information and number of layers
·Antenna ports
·PTRS-DMRS association
·DMRS sequence initialization

Whether the transmission waveform is CP-OFDM or DFT-s-OFDM, and whether transform precoding is enabled or disabled, is indicated by repurposing an existing field present in DCI format 0-1 or DCI format 0-2.

Thus, the dynamic transmission waveform switching is possible without increasing the DCI bit number.

Hereinafter, non-limiting embodiments of the present disclosure will be described.

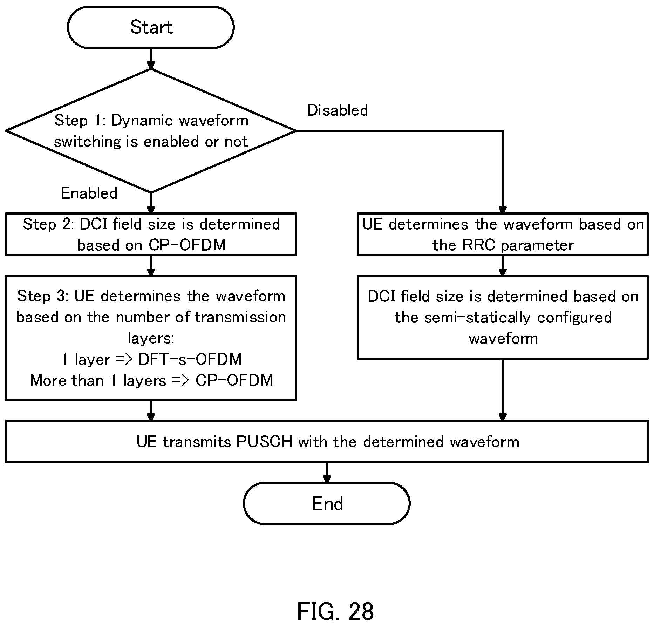

Referring to FIG. 28, the terminal determines in Step 1 whether dynamic transmission waveform switching is enabled.

In a case where the dynamic transmission waveform switching is enabled in Step 1, the terminal determines the DCI field size based on CP-OFDM in Step 2. Further, the terminal receives DCI according to the determined DCI field size and determines the number of transmission layers.

In Step 3, the terminal determines the transmission waveform based on the number of transmission layers. For example, when one-layer transmission is indicated, the terminal determines the transmission waveform as DFT-s-OFDM, and when two-or-more-layer transmission is indicated, the terminal determines the transmission waveform as CP-OFDM.

In a case where the dynamic transmission waveform switching is not enabled in Step 1, the terminal determines the transmission waveform based on an RRC parameter(s) and determines the DCI field size based on the semi-statically configured transmission waveform.

(Embodiment 1)

In the present embodiment, the terminal determines the transmission waveform of PUSCH based on the number of transmission layers indicated to the terminal by the Precoding information and number of layers field or the SRI field included in DCI.

[Step 1]

Whether dynamic transmission waveform switching is enabled or disabled for DG-PUSCH dynamically scheduled by DCI format 0-1 or DCI format 0-2 is configured by RRC. For example, dynamic transmission waveform switching may be enabled by the following method. In a case where the terminal is configured to Disabled, the terminal performs semi-static transmission waveform switching.

<Method 1 for Enabling Dynamic Transmission Waveform Switching>

Dynamic transmission waveform switching is enabled by a new parameter value (dynamicSwitch) of the parameter (transformPrecoder) in PUSCH-ConfigIE. The dynamic transmission waveform switching is enabled based on dynamicSwitch, which is a new parameter value of transformPrecoder included in pusch-Config for PUSCH dynamically scheduled by DCI format 0-1 or DCI format 0-2.

Specifically, in a case where the value of transformPrecoder is configured to dynamicSwitch, the terminal dynamically determines the transmission waveform of PUSCH based on information indicated by DCI to be described later. That is, the terminal determines whether to apply DFT-s-OFDM or CP-OFDM to the PUSCH. Note that, "dynamicSwitch" that is a value configured to transformPrecoder is one example, and the present disclosure is not limited thereto.

In a case where the value of transformPrecoder is configured to enabled, on the other hand, the terminal may enable the semi-static transmission waveform switching of PUSCH. The terminal may semi-statically configure the transmission waveform of PUSCH to DFT-s-OFDM instead of enabling the semi-static transmission waveform switching.

Further, in a case where the value of transformPrecoder is configured to disabled, the terminal may disable the semi-static transmission waveform switching of PUSCH. Instead of disabling the semi-static transmission waveform switching, the terminal may semi-statically configure the transmission waveform of PUSCH to CP-OFDM.

Further, in a case where transformPrecoder is not configured, the terminal determines the transmission waveform based on msg3-transformPrecoder.

<Method 2 for Enabling Dynamic Transmission Waveform Switching>

A new RRC parameter transformPrecoderDynamic is introduced to pusch-ConfigIE for PUSCH dynamically scheduled by DCI format 0-1 or DCI format 0-2, and dynamic transmission waveform switching is enabled based on transformPrecoderDynamic.

Specifically, in a case where transformPrecoderDynamic is configured to pusch-ConfigIE, the terminal determines that the value of transformPrecoder, which is an existing RRC parameter, is disabled (that is, the terminal discards the value of transformPrecoder), enables the dynamic transmission waveform switching, and performs Step 2 and Step 3 illustrated in FIG. 28.

In a case where transformPrecoderDynamic is not configured and the value of transformPrecoder is configured to enabled, the terminal may enable the semi-static transmission waveform switching for the PUSCH transmission waveform. The terminal may semi-statically configure the transmission waveform of PUSCH to DFT-s-OFDM instead of enabling the semi-static transmission waveform switching.

In a case where transformPrecoderDynamic is not configured and the value of transformPrecoder is configured to disabled, the terminal may disable the semi-static transmission waveform switching of PUSCH. Instead of disabling the semi-static transmission waveform switching, the terminal may semi-statically configure the transmission waveform of PUSCH to CP-OFDM.

In a case where transformPrecoderDynamic is not configured and transformPrecoder is not configured, the terminal determines the transmission waveform based on msg3-transformPrecoder.

[Step 2]

In Embodiment 1, the terminal uses the Precoding information and number of layers field among the parameters included in DCI to determine the number of layers. Hereinafter, a method for determining the size (the number of bits) for the Precoding information and number of layers field necessary for receiving the Precoding information and number of layers field will be described.

In the terminal, in a case where dynamic transmission waveform switching is enabled, the size (the number of bits) for the Precoding information and number of layers field in DCI is configured to the same number of bits as in a case where the CP-OFDM transmission waveform is semi-statically configured, which is specifically as follows.

Note that, when the DCI field size in a case where a transmission waveform other than CP-ODFM is configured is used in Step 1, the size (the number of bits) for the Precoding information and number of layers field can be determined based on the DCI field size of the used transmission waveform.

(Case 1) In a case where the RRC parameter txConfig included in pusch-Config IE is configured as nonCodeBook, the number of bits for the Precoding information and number of layers field is 0 bit.

(Case 2) In a case where the RRC parameter txConfig included in pusch-Config IE is configured as codebook and the number of antenna ports is configured to one, the number of bits for the Precoding information and number of layers field is 0 bit.

(Case 3) In a case where the RRC parameter txConfig included in pusch-Config IE is configured as codebook, the number of antenna ports is configured to four, and ul-FullPowerTransmission is not configured or the value of ul-FullPowerTransmission is configured to fullpowerMode2 or fullpower:

(Case 3-1) when the RRC parameter maxRank is configured as two, three, or four, the number of bits for the Precoding information and number of layers field is 4, 5, or 6 bits; and

(Case 3-2) when the RRC parameter maxRank is configured as one, the number of bits for the Precoding information and number of layers field is 2, 4, or 5 bits.

(Case 4) In a case where the RRC parameter txConfig included in pusch-Config IE is configured as codebook, the number of antenna ports is configured to four, and the value of ul-FullPowerTransmission is configured to fullpowerMode1:

(Case 4-1) when the RRC parameter maxRank is configured as two, the number of bits for the Precoding information and number of layers field is 4 or 5 bits;

(Case 4-2) when the RRC parameter maxRank is configured as three or four, the number of bits of the Precoding information and number of layers field is 4 or 6 bits; and

(Case 4-3) when the RRC parameter maxRank is configured as one, the number of bits for the Precoding information and number of layers field is 3 or 4 bits.

(Case 5) In a case where the RRC parameter txConfig included in pusch-Config IE is configured as codebook, the number of antenna ports is configured to two, and ul-FullPowerTransmission is not configured or the value of ul-FullPowerTransmission is configured to fullpowerMode2 or fullpower:

(Case 5-1) when the RRC parameter maxRank is configured as two, the number of bits for the Precoding information and number of layers field is 2 or 4 bits; and

(Case 5-2) when the RRC parameter maxRank is configured as one, the number of bits for the Precoding information and number of layers field is 1 or 3 bit(s).

(Case 6) In a case where the RRC parameter txConfig included in pusch-Config IE is configured as codebook, the number of antenna ports is configured to two, and the value of ul-FullPowerTransmission is configured to fullpowerMode1, the number of bits for the Precoding information and number of layers field is 2 bits.

[Step 3] The terminal can receive the Precoding information and number of layers field when the number of bits for the Precoding information and number of layers field is determined. The terminal determines the number of transmission layers for PUSCH transmission based on information in the Precoding information and number of layers field or the SRI field of DCI, for example. Further, the terminal determines the transmission waveform of PUSCH based on the determined number of transmission layers.

Specifically, in a case where the number of transmission layers is one, the terminal determines that the transmission waveform of PUSCH is DFT-s-OFDM. On the other hand, in a case where the number of transmission layers is two or more, the terminal determines that the transmission waveform of PUSCH is CP-OFDM. The method for determining the transmission waveform in Step 3 for each case in Step 2 described above is as follows.

(Case 1) Since the number of bits for Precoding information and number of layers is zero, the terminal determines the number of transmission layers based on the information in the SRI field. For example, in a case where the determined number of transmission layers is one, the terminal determines that the transmission waveform of PUSCH is DFT-s-OFDM, and in a case where the determined number of transmission layers is two or more, the terminal determines that the transmission waveform of PUSCH is CP-OFDM.

(Case 2) The terminal determines that the number of transmission layers is one, and determines that the transmission waveform is DFT-s-OFDM.

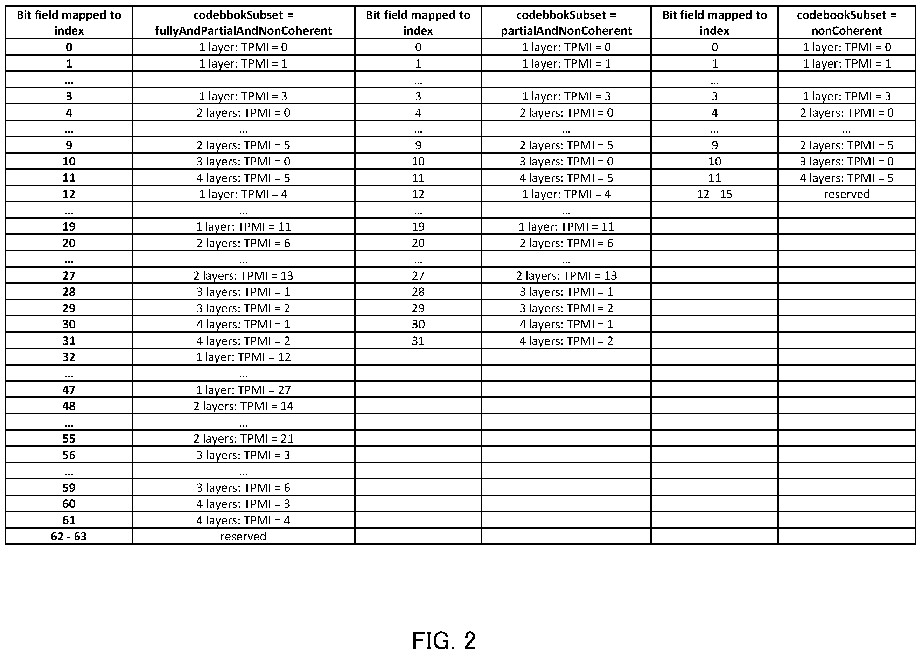

(Case 3-1) The terminal determines the number of transmission layers and the TPMI (Transmit Precoding Matrix Index) based on the mapping table given in FIG. 2 and the information in the Precoding information and number of layers field (for example, the value of Bit field mapped to index in FIG. 2). In a case where the determined number of transmission layers is one, the terminal determines that the transmission waveform of PUSCH is DFT-s-OFDM, and in a case where the determined number of transmission layers is two or more, the terminal determines that the transmission waveform of PUSCH is CP-OFDM.

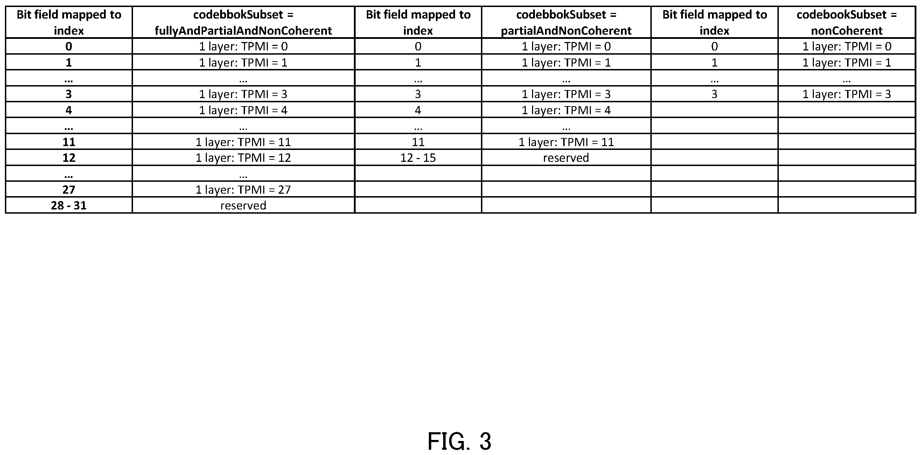

(Case 3-2) The terminal determines that the number of transmission layers is one, and determines that the transmission waveform is DFT-s-OFDM. Further, the terminal determines the TPMI based on the mapping table given in FIG. 3 and the information in the Precoding information and number of layers field (for example, the value of Bit field mapped to index in FIG. 3).

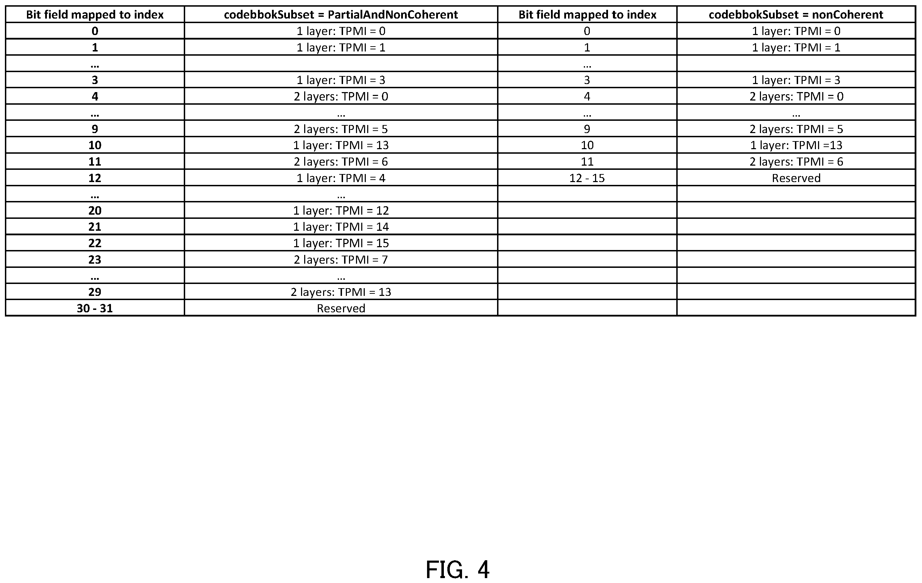

(Case 4-1) The terminal determines the number of transmission layers and the TPMI based on the mapping table given in FIG. 4 and the information in the Precoding information and number of layers field (for example, the value of Bit field mapped to index in FIG. 4). In a case where the determined number of transmission layers is one, the terminal determines that the transmission waveform of PUSCH is DFT-s-OFDM, and in a case where the determined number of transmission layers is two or more, the terminal determines that the transmission waveform of PUSCH is CP-OFDM.

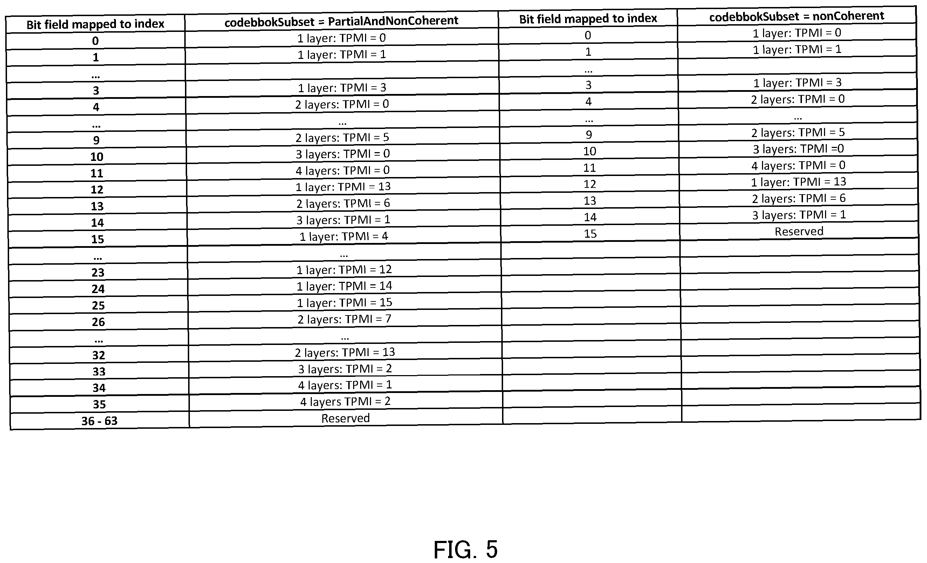

(Case 4-2) The terminal determines the number of transmission layers and the TPMI based on the mapping table given in FIG. 5 and the information in the Precoding information and number of layers field (for example, the value of Bit field mapped to index in FIG. 5). In a case where the determined number of transmission layers is one, the terminal determines that the transmission waveform of PUSCH is DFT-s-OFDM, and in a case where the determined number of transmission layers is two or more, the terminal determines that the transmission waveform of PUSCH is CP-OFDM.

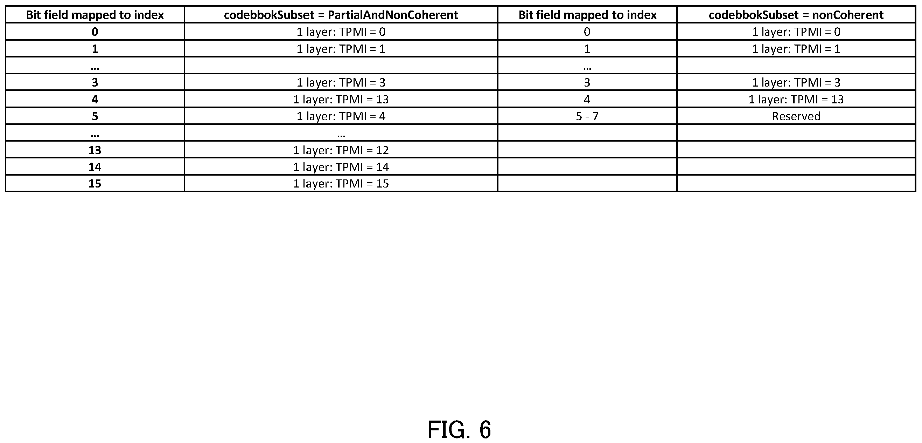

(Case 4-3) The terminal determines that the number of transmission layers is one, and determines that the transmission waveform is DFT-s-OFDM. Further, the terminal determines the TPMI based on the mapping table given in FIG. 6 and the information in the Precoding information and number of layers field (for example, the value of Bit field mapped to index in FIG. 6).

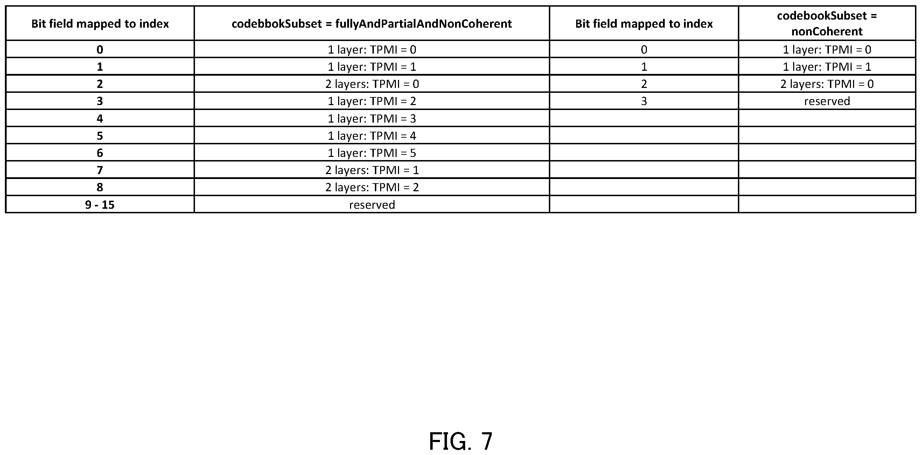

(Case 5-1) The terminal determines the number of transmission layers and the TPMI based on the mapping table given in FIG. 7 and the information in the Precoding information and number of layers field (for example, the value of Bit field mapped to index in FIG. 7). In a case where the determined number of transmission layers is one, the terminal determines that the transmission waveform of PUSCH is DFT-s-OFDM, and in a case where the determined number of transmission layers is two or more, the terminal determines that the transmission waveform of PUSCH is CP-OFDM.

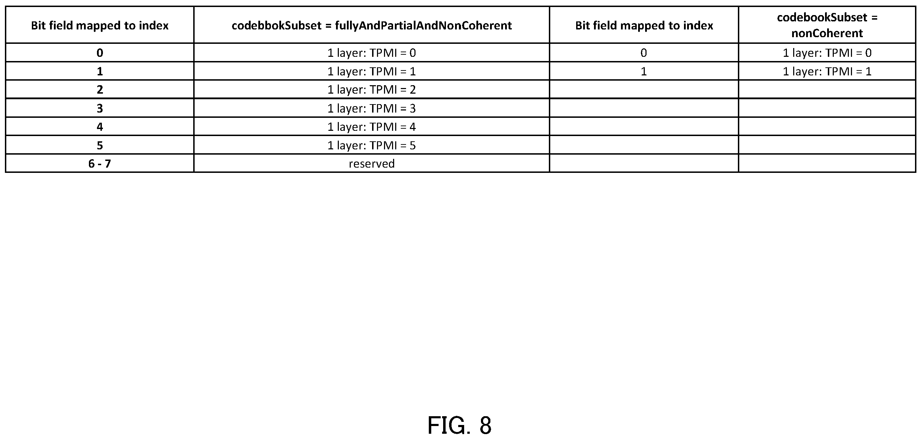

(Case 5-2) The terminal determines that the number of transmission layers is one, and determines that the transmission waveform is DFT-s-OFDM. Further, the terminal determines the TPMI based on the mapping table given in FIG. 8 and the information in the Precoding information and number of layers field (for example, the value of Bit field mapped to index in FIG. 8).

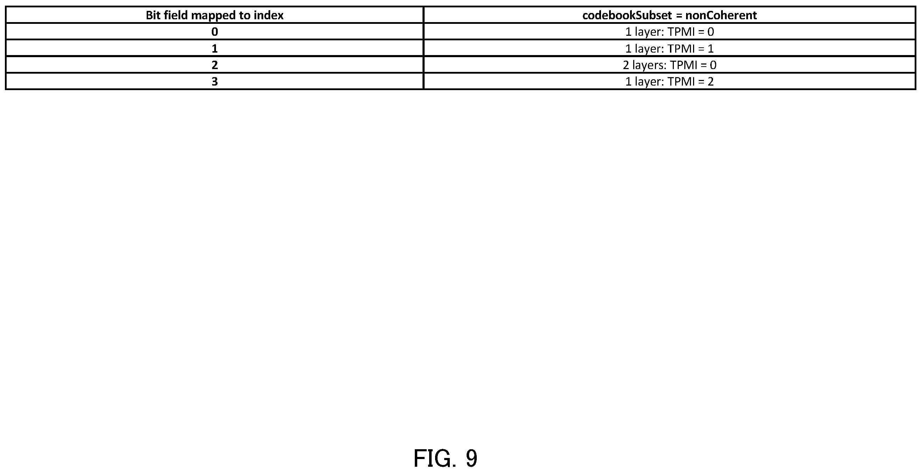

(Case 6) The terminal determines the number of transmission layers and the TPMI based on the mapping table given in FIG. 9 and the information in the Precoding information and number of layers field (for example, the value of Bit field mapped to index in FIG. 9). In a case where the determined number of transmission layers is one, the terminal determines that the transmission waveform of PUSCH is DFT-s-OFDM, and in a case where the determined number of transmission layers is two or more, the terminal determines that the transmission waveform of PUSCH is CP-OFDM.

According to the present embodiment, it is possible to indicate the transmission waveform of PUSCH by using the Precoding information and number of layers or SRI field, which is an existing DCI field, and thus, it is possible to indicate a dynamic transmission waveform without increasing the number of DCI bits for transmission waveform switching. By dynamically switching the transmission waveform according to the number of transmission layers, it is possible to flexibly switch between securing a coverage with DFT-s-OFDM and one-layer transmission and performing high-efficiency transmission with CP-OFDM and multiple layer transmission.

Further, according to the present embodiment, in a case where the terminal performs dynamic transmission waveform switching between CP-OFDM and DFT-s-OFDM, the terminal determines the field size of DCI based on the field size of DCI in a case where CP-OFDM is configured. Thus, even in a case where the transmission waveform is dynamically switched by a single DCI format (for example, DCI format 0-1 or DCI format 0-2), the terminal can grasp the field size of the DCI and appropriately receive the DCI regardless of the switched transmission waveform.

(Embodiment 2)

In the present embodiment, the terminal determines the transmission waveform of PUSCH based on the number of transmission layers and the TPMI, which are indicated to the terminal by the Precoding information and number of layers field or the SRI field included in DCI.

In Embodiment 2, the Precoding information and number of layers field among the parameters included in DCI is used to determine the number of layers, but the method for determining the size (the number of bits) for the Precoding information and number of layers field necessary for receiving the Precoding information and number of layers field (that is, Step 1 and Step 2) is the same as in Embodiment 1.

Embodiment 2 is different from Embodiment 1 in that in Step 3, the transmission waveform of PUSCH is determined based on the value of TPMI in a case where the number of transmission layers is one. The TPMI and transmission waveform mapping may be determined in advance or may be indicated by RRC. Further, a threshold may be configured to the TPMI, and the transmission waveform may be configured to DFT-s-OFDM in a case where the indicated TPMI is larger than the threshold, and the transmission waveform may be configured to CP-OFDM in a case where the TPMI is equal to or less than the threshold. Note that, the transmission waveform may be configured to CP-OFDM in a case where the indicated TPMI is larger than the threshold, and the transmission waveform may be configured to DFT-s-OFDM in a case where the TPMI is equal to or less than the threshold.

[Step 3]

The terminal determines the transmission waveform of PUSCH based on the determined number of transmission layers and the TPMI.

Specifically, in a case where the number of transmission layers is one, the terminal determines the transmission waveform of PUSCH based on the value of TPMI. On the other hand, in a case where the number of transmission layers is two or more, the terminal determines that the transmission waveform of PUSCH is CP-OFDM. The method for determining the transmission waveform in Step 3 for each case in Step 2 described above is as follows.

(Case 1) The terminal determines the number of transmission layers based on the information in the SRI field. In a case where the determined number of transmission layers is one, the terminal determines the transmission waveform of PUSCH based on the SRI, and in a case where the determined number of transmission layers is two or more, the terminal determines that the transmission waveform of PUSCH is CP-OFDM.

(Case 2) The terminal determines that the number of transmission layers is one, and determines that the transmission waveform is DFT-s-OFDM.

(Case 3-1) In a case where the determined number of transmission layers is one, the terminal determines, based on the mapping table given in FIG. 2, the transmission waveform of PUSCH based on the value of TPMI, and in a case where the determined number of transmission layers is two or more, the terminal determines, based on the mapping table given in FIG. 2, that the transmission waveform of PUSCH is CP-OFDM.

(Case 3-2) The terminal determines, based on the mapping table given in FIG. 3, the transmission waveform of PUSCH based on the value of TPMI.

(Case 4-1) In a case where the determined number of transmission layers is one, the terminal determines, based on the mapping table given in FIG. 4, the PUSCH transmission waveform based on the value of TPMI, and in a case where the determined number of transmission layers is two or more, the terminal determines, based on the mapping table given in FIG. 4, that the PUSCH transmission waveform is CP-OFDM.

(Case 4-2) In a case where the determined number of transmission layers is one, the terminal determines, based on the mapping table given in FIG. 5, the transmission waveform of PUSCH based on the value of TPMI, and in a case where the determined number of transmission layers is two or more, the terminal determines, based on the mapping table given in FIG. 5, that the transmission waveform of PUSCH is CP-OFDM.

(Case 4-3) The terminal determines, based on the mapping table given in FIG. 6, the transmission waveform of PUSCH based on the value of TPMI.

(Case 5-1) In a case where the determined number of transmission layers is one, the terminal determines, based on the mapping table given in FIG. 7, the PUSCH transmission waveform based on the value of TPMI, and in a case where the determined number of transmission layers is two or more, the terminal determines, based on the mapping table given in FIG. 7, that the PUSCH transmission waveform is CP-OFDM.

(Case 5-2) The terminal determines, based on the mapping table given in FIG. 8, the transmission waveform of PUSCH based on the value of TPMI.

(Case 6) In a case where the determined number of transmission layers is one, the terminal determines, based on the mapping table provided in FIG. 9, the PUSCH transmission waveform based on the value of TPMI, and in a case where the determined number of transmission layers is two or more, the terminal determines, based on the mapping table provided in FIG. 9, that the PUSCH transmission waveform is CP-OFDM.

The association of the value of TPMI with the transmission waveform of PUSCH (for example, the transmission waveform in a case where TPMI = n is indicated) may be determined in advance or may be configured by RRC.

In the association by RRC, the association of each TPMI number with a transmission waveform may be indicated, or a threshold for the TPMI number for switching the transmission waveform may be indicated.

In a case where the threshold is configured, for example, TPMI numbers equal to or less than the threshold may be associated with DFT-s-OFDM, and TPMI numbers greater than the threshold may be associated with CP-OFDM. Alternatively, for example, TPMI numbers equal to or less than the threshold may be associated with CP-OFDM, and TPMI numbers greater than the threshold may be associated with DFT-s-OFDM.

Further, a plurality of thresholds can be provided according to the number of transmission waveforms. TPMI numbers equal to or less than a first threshold may be associated with a first transmission waveform, TPMI numbers greater than the first threshold and equal to or less than a second threshold may be associated with a second transmission waveform, and TPMI numbers greater than the second threshold may be associated with a third transmission waveform.

Further, number $N_{TPMI}$ of TPMI numbers associated with DFT-s-OFDM may be indicated. In this case, for example, TPMI = 0 to $N_{TPMI} - 1$ may be associated with DFT-s-OFDM, and other TPMI numbers may be associated with CP-OFDM. Further, the association of the value of TPMI with the transmission waveform of PUSCH may be different for each of the cases described above, or the same association may be used. Further, the number of TPMI numbers associated with DFT-s-OFDM and the number of TPMI numbers associated with CP-OFDM may be different.

According to the present embodiment, it is possible to indicate the transmission waveform of PUSCH by using the Precoding information and number of layers or SRI field, which is an existing DCI field, and thus, it is possible to indicate a dynamic transmission waveform without increasing the number of DCI bits for transmission waveform switching. By dynamically switching the transmission waveform according to the number of transmission layers, it is possible to flexibly switch between securing a coverage with DFT-s-OFDM and one-layer transmission and performing high-efficiency transmission with CP-OFDM and multiple layer transmission. Further, in one-layer transmission, the transmission waveform is determined based on the TPMI as well, allowing for more flexible transmission waveform switching.

(Embodiment 3)

Step 1 of an operation example of Embodiment 3 may be the same as that of Embodiment 1.
In Embodiment 3, the terminal determines the transmission waveform of PUSCH based on an index indicated to the terminal by the Time domain resource assignment (TDRA) field included in DCI. Therefore, in Step 2, the method for determining the number of bits for TDRA necessary for receiving the TDRA will be described.

[Step 2]

The number of bits for TDRA is the same for both CP-OFDM and DFT-s-OFDM. The terminal configures the size (the number of bits) for the TDRA field in DCI to

$$[1]$$

$$\lceil \log_2 I \rceil$$

bits, where I is the number of registrations of the RRC parameter pusch-TimeDomainAllocationList.
The size (the number of bits) for the Precoding information and number of layers field and any other field, for example, the Antenna ports field, in DCI is determined based on CP-OFDM. As described in Embodiment 1, the determination can also be based on DFT-s-OFDM.
The TDRA may include slot offset K2, start/length indicator SLIV or start symbol S and number L of symbols (PUSCH length), the PUSCH mapping type, the number of repetition transmissions, and the transmission waveform, which are applied to PUSCH.
Further, the terminal may determine the size (the number of bits) for the Precoding information and number of layers field in DCI. The method for determining the size (the number of bits) for the Precoding information and number of layers field is the same as in Embodiments 1 and 2.

[Step 3]

The terminal determines the time domain resource assignment and transmission waveform for PUSCH transmission based on the information in the TDRA field in DCI. Specifically, the terminal determines, based on an index indicated by the TDRA field, a time domain resource assignment candidate (that is, a combination of K2, S, L, PUSCH mapping type, the number of repetitions, and the transmission waveform) associated with the index.
Information on a time domain resource assignment candidate associated with an index of TDRA can be indicated by RRC.
The association of the value of an index of TDRA with the transmission waveform of PUSCH (for example, the transmission waveform in a case where index n is indicated) may be configured by RRC. Further, the number of indices associated with DFT-s-OFDM and the number of indices associated with CP-OFDM may be different.
Further, in a case where the terminal determines, based on the information in the TDRA field, that the transmission waveform of PUSCH is DTF-s-OFDM, the terminal does not assume that two or more transmission layers are indicated by the Precoding information and number of layers field.
According to the present embodiment, it is possible to indicate the transmission waveform of PUSCH by using the TDRA field, which is an existing DCI field, and thus, it is possible to indicate a dynamic transmission waveform without increasing the number of DCI bits for transmission waveform switching.

(Embodiment 4)

In Embodiment 4, the terminal determines the transmission waveform of PUSCH based on an index indicated to the terminal by the modulation and coding scheme (MCS) field included in DCI. Hereinafter, a method for determining the size of the MCS field necessary for receiving the MCS field will be described.
Step 1 of Embodiment 4 may be the same as that of Embodiment 1.

[Step 2]

Since the size (the number of bits) for the MCS field in DCI is 5 bits for both CP-OFDM and DFT-s-OFDM, the terminal configures the size (the number of bits) for the MCS field to 5 bits.

The size (the number of bits) for the Precoding information and number of layers field and any other field, for example, the Antenna ports field, in DCI, is determined based on CP-OFDM. As described in Embodiment 1, the determination can also be based on DFT-s-OFDM.

[Step 3]

The terminal determines modulation order $Q_m$ and target code rate R from an MCS table by using $I_{MCS}$ of DCI. Specifically, the terminal determines the transmission waveform based on the index $I_{MCS}$ indicated by the MCS field.

The association of the value of $I_{MCS}$ with the transmission waveform of PUSCH (for example, the transmission waveform in a case where $I_{MCS=n}$ is indicated) may be determined in advance by a standard or may be configured by RRC. Further, in the association by RRC, the association of each $I_{MCS}$ with a transmission waveform may be indicated, or a threshold for the MCS number (waveform-MCS) for switching the transmission waveform may be indicated.

In a case where the threshold is configured, for example, MCS numbers equal to or less than the threshold may be associated with DFT-s-OFDM, and MCS numbers greater than the threshold may be associated with CP-OFDM. In a case where a wide range using DFT-s-OFDM is targeted, the code rate is often lowered to increase the reliability, and CP-OFDM aims for high efficiency, and thus, it is effective to assign a high code rate (a high MCS number(s)) to CP-OFDM.

However, the reliability may be increased by encoding in a case where the transmission waveform aims for high efficiency, by associating MCS numbers equal to or less than the threshold with CP-OFDM, and by associating MCS numbers greater than the threshold with DFT-s-OFDM.

Further, number $N_{MCS}$ of MCS numbers associated with DFT-s-OFDM may be indicated. In this case, for example, $I_{MCS}$ = 0 to $N_{MCS}$ - 1 may be associated with DFT-s-OFDM, and other $I_{MCS}$ may be associated with CP-OFDM. Conversely, $I_{MCS}$ = 0 to $N_{MCS}$ - 1 may be associated with CP-OFDM, and other $I_{MCS}$ may be associated with DFT-s-OFDM.

Further, the number of MCS numbers associated with DFT-s-OFDM and the number of MCS numbers associated with CP-OFDM may be different.

According to the present embodiment, it is possible to indicate the transmission waveform of PUSCH by using the MCS field, which is an existing DCI field, and thus, it is possible to indicate a dynamic transmission waveform without increasing the number of DCI bits for transmission waveform switching.

(Variations of Embodiment 4)

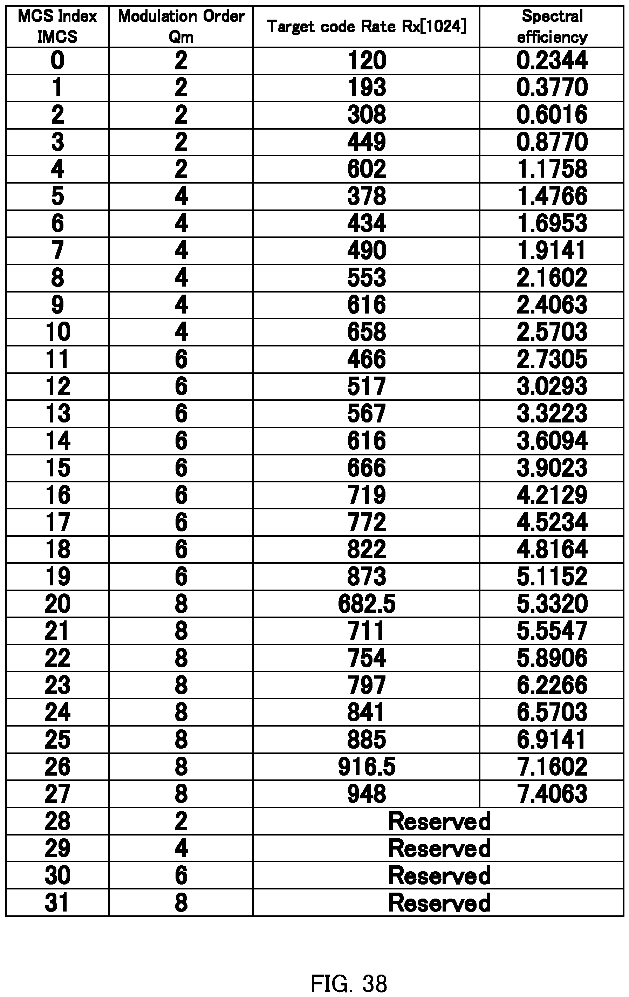

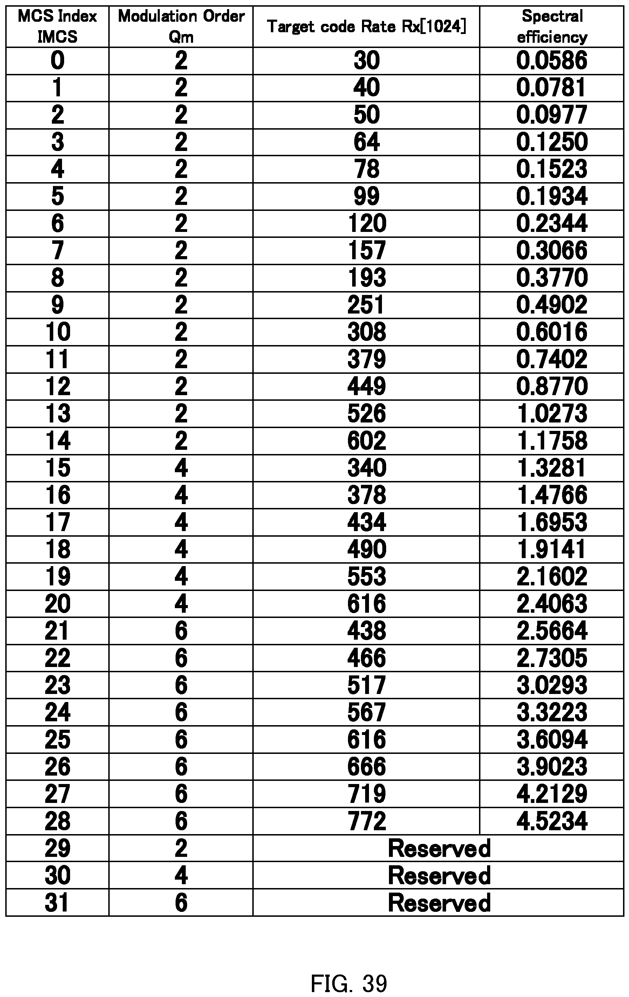

According to NPL 7, the MCS table for NR includes values of $I_{MCS}$ that determine modulation order $Q_m$ and target code rate R, as well as values of $I_{MCS}$ that determine only modulation order $Q_m$. For example, in an MCS table including 256QAM for CP-OFDM or an MCS table for DFT-s-OFDM, $0 \le I_{MCS} \le 27$ are values of $I_{MCS}$ that determine modulation order $Q_m$ and target code rate R (FIG. 38), and $28 \le I_{MCS} \le 31$ are values of $I_{MCS}$ that determine only modulation order $Q_m$. Further, in an MCS table including up to 64QAM for CP-OFDM (that is, not including 256QAM), $0 \le I_{MCS} \le 28$ are values of $I_{MCS}$ that determine modulation order $Q_m$ and target code rate R, and $29 \le I_{MCS} \le 31$ are values of $I_{MCS}$ that determine only modulation order $Q_m$ (FIG. 39). Generally, the values of $I_{MCS}$ that determine modulation order $Q_m$ and target code rate R are indicated at the time of the first transmission, and the values of $I_{MCS}$ that determine only modulation order $Q_m$ are indicated at the time of retransmission.

The values of $I_{MCS}$ that determine only modulation order $Q_m$ do not have a nature in which the spectral efficiency increases as the MCS number increases continuously from the values of $I_{MCS}$ that determine modulation order $Q_m$ and target code rate R. Modulation order $Q_m$ once decreases when $I_{MCS}$ = 28 in FIG. 38 and when $I_{MCS}$ = 29 in FIG. 39, and target code rate R is not determined even when the MCS number increases, and thus, the spectral efficiency is also undetermined. Accordingly, it is not possible to apply Embodiment 4 as it is at the time of retransmission. Accordingly, in the present variation, a method for determining the transmission waveform at the time of retransmission (that is, when a value of $I_{MCS}$ that determines only modulation order $Q_m$ is indicated) will be described.

Variations 1 to 3 to be described below describe the determination of the transmission waveform at the time of retransmission, and the method described in Embodiment 4 may be used for the determination of the transmission waveform at the time of the first transmission. The range of values that the threshold for the MCS number (waveform-MCS) for switching the transmission waveform at the time of the first transmission or number $N_{MCS}$ of MCS numbers associated with DFT-s-OFDM can take may be values of $I_{MCS}$ that determine modulation order $Q_m$ and target code rate R.

In a case where the threshold is configured, for example, MCS numbers equal to or less than the threshold may be associated with DFT-s-OFDM, and MCS numbers greater than the threshold, in a range of values of $I_{MCS}$ that determine modulation order $Q_m$ and target code rate R, may be associated with CP-OFDM.

Further, in a case where number $N_{MCS}$ of MCS numbers associated with DFT-s-OFDM is indicated, for example, $I_{MCS}$ = 0 to $N_{MCS}$ - 1 may be associated with DFT-s-OFDM, and other $I_{MCS}$-s in a range of values of $I_{MCS}$ that determine modulation order $Q_m$ and target code rate R may be associated with CP-OFDM.

(Variation 1 of Embodiment 4)

In the present variation, the transmission waveform at the time of retransmission is determined as being identical to the transmission waveform of a PUSCH in which the same transport block has been transmitted immediately before. The present variation makes it possible to omit the processing for transmission waveform determination at the time of retransmission, and therefore has an advantage capable of simplifying the transmission waveform determination process.

(Variation 2 of Embodiment 4)

In the present variation, the transmission waveform at the time of retransmission is determined based on the number of transmission layers indicated to the terminal. For example, in a case where the number of transmission layers is one, the terminal determines that the transmission waveform of PUSCH is DFT-s-OFDM. On the other hand, in a case where the number of transmission layers is two or more, the terminal determines that the transmission waveform of PUSCH is CP-OFDM. According to the present variation, it is possible to indicate a dynamic transmission waveform even at the time of retransmission. By dynamically switching the transmission waveform according to the number of transmission layers, it is possible to flexibly switch between securing a coverage with DFT-s-OFDM and one-layer transmission and performing high-efficiency transmission with CP-OFDM and multiple layer transmission.

(Variation 3 of Embodiment 4)

In the present variation, the transmission waveform at the time of retransmission is determined based on the modulation order indicated to the terminal. One of the following options may be applied to the association of the modulation order with the transmission waveform.

<Option 1>

The association of the modulation order with the transmission waveform is determined in advance. For example, an association such as DFT-s-OFDM in the case of QPSK ($Q_m$ = 2) or 16QAM ($Q_m$ = 4), and CP-OFDM in the case of 64QAM ($Q_m$ = 6) or 256QAM ($Q_m$ = 8) may be determined. The association of the modulation order with the transmission waveform may be determined in advance in a standard or may be configured by a higher layer (RRC signaling). Further, in the same manner as in Embodiment 4, the threshold for the MCS number (waveform-MCS) or number $N_{MCS}$ of MCS numbers associated with DFT-s-OFDM may be indicated for the value of $I_{MCS}$ that determines only modulation order $Q_m$.

<Option 2>

The association of the value of $I_{MCS}$ that determines only modulation order $Q_m$ with the value of $I_{MCS}$ that determines modulation order $Q_m$ and target code rate R is determined in advance, and at the time of retransmission, the transmission waveform is determined, in the same manner as at the time of the first transmission, based on the value of $I_{MCS}$ that determines modulation order $Q_m$ and target code rate R, which corresponds to the value of $I_{MCS}$ that determines only modulation order $Q_m$. The "value of $I_{MCS}$ that determines modulation order $Q_m$ and target code rate R" as the association destination may be the smallest value of $I_{MCS}$ among a plurality of values of $I_{MCS}$ having the same modulation order $Q_m$. For example, in the MCS table including 256QAM for CP-OFDM illustrated in FIG. 38, the minimum value of the index of $I_{MCS}$, which determines modulation order $Q_m$ and target code rate R, for each modulation order is $I_{MCS}$ = 0 for QPSK ($Q_m$ = 2), $I_{MCS}$ = 5 for 16QAM ($Q_m$ = 4), $I_{MCS}$ = 11 for 64QAM ($Q_m$ = 6), and $I_{MCS}$ = 20 for 256QAM ($Q_m$ = 8). That is, for the determination of the transmission waveform, the transmission waveform may be determined in the same manner as at the time of the first transmission, with $I_{MCS}$ = 0 for $I_{MCS}$ = 28 ($Q_m$ = 2) at the time of retransmission, $I_{MCS}$ = 5 for $I_{MCS}$ = 29 ($Q_m$ = 4), $I_{MCS}$ = 11 for $I_{MCS}$ = 30 ($Q_m$ = 6), and $I_{MCS}$ = 20 for $I_{MCS}$ = 31 ($Q_m$ = 8).
Note that, the index of $I_{MCS}$, which determines modulation order $Q_m$ and target code rate R and is associated with the modulation order at the time of retransmission, for each modulation order is not limited to the minimum value of the index, and the maximum value of the index may be associated. Further, the value may be offset from the minimum value (or maximum value) of the index. Further, the value of the index may be determined in advance in a standard or may be configured by a higher layer (RRC signaling). Further, the value offset from the minimum value (or maximum value) of the index may be determined in advance in a standard or may be configured by a higher layer (RRC signaling).

(Method for Determining MCS Table)

According to NPL 7, in NR, an MCS table (mcs-Table) used in a case where the transmission waveform is CP-OFDM and an MCS table (mcs-TableTransformPrecoder) used in a case where the transmission waveform is DFT-s-OFDM can be configured to the terminal. That is, the terminal first determines the transmission waveform and then determines the MCS table to be used for transmission as the MCS table corresponding to the transmission waveform.

On the other hand, in Variation 3 of Embodiment 4, an MCS table is required for the transmission waveform determination at the time of retransmission, and thus, it is necessary to determine the MCS table before determining the transmission waveform. For the method for determining the MCS table, the following options may be applied.

<Option 1 at the time of First Transmission>

[Step 1] The terminal determines the transmission waveform based on the MCS index by using the method described in Embodiment 4.

[Step 2] The terminal determines the MCS table based on the determined transmission waveform and the RRC parameter corresponding to the transmission waveform. The RRC parameter is, for example, mcs-Table in a case where the transmission waveform is CP-OFDM, and mcs-TableTransformPrecoder in a case where the transmission waveform is DFT-s-OFDM.

[Step 3] The terminal determines modulation order $Q_m$ and target code rate R based on the determined MCS table and the MCS index.

Note that, the present option is not limited to Variation 3 of Embodiment 4, and may be applied to Embodiment 4 and all the variations of Embodiment 4.

<Option 2 at the time of First Transmission>

[Step 1] The terminal determines the MCS table to be used, in advance, before the transmission waveform determination. For example, the terminal determines that the MCS table is used based on an RRC parameter (for example, mcs-Table) corresponding to CP-OFDM. Alternatively, the terminal may determine that the MCS table is used based on an RRC parameter (for example, mcs-TableTransformPrecoder) corresponding to DFT-s-OFDM.

[Step 2] The terminal determines the transmission waveform based on the MCS index by using the method of Embodiment 4. Further, the terminal determines modulation order $Q_m$ and target code rate R based on the determined MCS table and the MCS index.

Note that, the present option is not limited to Variation 3 of Embodiment 4, and may be applied to Embodiment 4 and all the variations of Embodiment 4.

<Option 1 at the time of Retransmission>

[Step 1] The terminal determines that the MCS table is the same as the MCS table used in the PUSCH in which the same transport block has been transmitted immediately before.

[Step 2] The terminal determines the modulation scheme and the transmission waveform based on the MCS index by using the method of Variation 3 of Embodiment 4 .

<Option 2 at the time of Retransmission>

[Step 1] The terminal determines the MCS table to be used, in advance, before the transmission waveform determination. For example, the terminal determines that the MCS table is used based on an RRC parameter (for example, mcs-Table) corresponding to CP-OFDM. Alternatively, the terminal may determine that the MCS table is used based on an RRC parameter (for example, mcs-TableTransformPrecoder) corresponding to DFT-s-OFDM.

[Step 2] The terminal determines the modulation scheme and the transmission waveform based on the MCS index by using the method of Variation 3 of Embodiment 4.

(Embodiment 5)

In Embodiment 5, the terminal determines the transmission waveform of PUSCH based on the resource allocation type indicated to the terminal by the Frequency domain resource assignment (FDRA) field included in DCI.

Step 1 of an operation example of Embodiment 5 may be the same as that of Embodiment 1.

Step 2 of an operation example of Embodiment 5 may be the same as in a case where dynamic resource allocation type switching in a method for determining the Frequency domain resource assignment field in another Embodiment 2 to be described later is enabled.

[Step 3]

The terminal determines the frequency resource allocation and the transmission waveform for PUSCH transmission based on the information in the FDRA field in DCI. Specifically, the terminal determines the transmission waveform based on the resource allocation type indicated by the FDRA field. Specifically, in a case where resource allocation type 0 is indicated as the frequency domain resource allocation method, the terminal determines that the transmission waveform is CP-OFDM. On the other hand, in a case where resource allocation type 1 is indicated as the frequency domain resource allocation method, the terminal determines that the transmission waveform is DFT-s-OFDM.

According to the present embodiment, it is possible to indicate a transmission waveform of PUSCH by using the FDRA field, which is an existing DCI field, and thus, it is possible to indicate a dynamic transmission waveform without increasing the number of DCI bits for transmission waveform switching.

(Other Embodiment 1)

Dynamic transmission waveform switching may be applied to Message 3 or Message A, which is the first uplink data transmission at the time of the initial access.

In this case, the terminal may transmit a preamble in a physical random access channel (PRACH) by switching the preamble in the PRACH between a case where dynamic transmission waveform switching is supported and a case where dynamic transmission waveform switching is not supported.

Further, a threshold for RSRP or RSRQ for switching the transmission waveform may be indicated to the terminal. For example, in a case where the RSRP or RSRQ of a reference signal at the time of the initial access is equal to or less than the threshold, the terminal may not select dynamic transmission waveform switching for PUSCH transmission in Message 3 or Message A, and in a case where the RSRP or RSRQ is greater than the threshold, the terminal may select dynamic transmission waveform switching. Alternatively, in a case where the RSRP or RSRQ at the time of initial access is equal to or less than the threshold, the terminal may select dynamic transmission waveform switching for PUSCH transmission in Message 3 or Message A, and in a case where the RSRP or RSRQ is greater than the threshold, the terminal may not select dynamic transmission waveform switching.

Further, a new parameter msg3-transformPrecoderDynamic may be introduced into a System Information Block (SIB), and dynamic transmission waveform switching may be enabled based on msg3-transformPrecoderDynamic. Specifically, in a case where msg3-transformPrecoderDynamic is configured in an SIB, the terminal determines that the value of msg3-transformPrecoder, which is an existing RRC parameter, is disabled (that is, the terminal discards the value of msg3-transformPrecoder), and enables dynamic transmission waveform switching. Alternatively, a new parameter value (msg3-transformPrecodeDynamic) may be introduced into msg3-transformPrecode in an SIB.

The terminal may determine whether dynamic transmission waveform switching is enabled or disabled, based on information included in DCI format 0-1 or a random access response (RAR) UL grant scrambled with a temporary cell-radio network temporary identifier (TC-RNTI).

As the transmission waveform indication, DCI format 0-1 or an RNR UL grant scrambled with a TC-RNTI may be used as Method 1, and further, the number of bits is not increased when a reserved bit field is used.

Method 2 may also be based on the number of transmission layers or the number of repetitions.

Method 3 may be based on the index of a TDRA table.

Method 4 may be based on the MCS index.

(Other Embodiment 2)

In the embodiments described above, the following methods may be used as the method for determining the number of bits for another parameter included in DCI, such as Frequency domain resource assignment, Antenna ports, PTRS-DMRS association, and DMRS sequence initialization.

[Frequency Domain Resource Assignment Field]

<Method 1>

In a case where dynamic transmission waveform switching is enabled, the terminal determines the size (the number of bits) for the Frequency domain resource assignment field in DCI by the following method.

In a case where the terminal determines that DFT-s-OFDM is used for PUSCH transmission according to the embodiments described above, the terminal applies resource allocation type 1 as the frequency domain resource allocation method. Further, the resource allocation is indicated by

[2]

$$\left\lceil \log_2 \left( \frac{N_{RB}^{UL,BWP}\left(N_{RB}^{UL,BWP}+1\right)}{2} \right) \right\rceil \text{ LSB}$$

of the Frequency domain resource assignment field.

In a case where the terminal determines that CP-OFDM is used for PUSCH transmission in the embodiments described above, on the other hand, the terminal applies resource allocation type 0 as the frequency domain resource allocation method. Further, the resource allocation is indicated by the $N_{RBG}$ LSB of the Frequency domain resource assignment field.

(In Case Where Resource Allocation Type 0 is Configured)

The number of bits for the Frequency domain resource assignment field is

[3]

$$\max \left( \left\lceil \log_2 \left( \frac{N_{RB}^{UL,BWP}\left(N_{RB}^{UL,BWP}+1\right)}{2} \right) \right\rceil , N_{RBG} \right)$$

bits, where $N_{RB}^{UL,BWP}$ is the number of resource blocks included in an uplink bandwidth part (BWP) configured to the terminal, and $N_{RBG}$ is the number of resource block groups (RBGs).

(In Case Where Resource Allocation Type 1 is Configured)

The number of bits for the Frequency domain resource assignment field is

[4]

$$\left\lceil \log_2 \left( \frac{N_{RB}^{UL,BWP}\left(N_{RB}^{UL,BWP}+1\right)}{2} \right) \right\rceil$$

bits.

(In Case Where Dynamic Resource Allocation Type Switching is Enabled)

The number of bits for the Frequency domain resource assignment field is determined based on the larger number of bits between type 0 and type 1, and is, therefore,

[5]

$$\max \left( \left\lceil \log_2 \left( \frac{N_{RB}^{UL,BWP}\left(N_{RB}^{UL,BWP}+1\right)}{2} \right) \right\rceil , N_{RBG} \right) + 1$$

bits.

In a case where the terminal determines that DFT-s-OFDM is used for PUSCH transmission according to the embodiments described above, the terminal applies resource allocation type 1 as the frequency domain resource allocation method. Further, the resource allocation is indicated by

$$[6]$$

$$\left\lceil \log_2 \left( \frac{N_{RB}^{UL,BWP}\left(N_{RB}^{UL,BWP}+1\right)}{2} \right) \right\rceil \text{ LSB}$$

of Frequency domain resource assignment field.

In a case where the terminal determines that CP-OFDM is used for PUSCH transmission according to the embodiments described above, the terminal determines whether resource allocation type 0 or resource allocation type 1 is applied based on the MSB of the Frequency domain resource assignment field.

In a case where resource allocation type 0 is applied, the resource allocation is indicated by the $N_{RBG}$ LSB of the Frequency domain resource assignment field. In a case where resource allocation type 1 is applied, the resource allocation is indicated by

$$[7]$$

$$\left\lceil \log_2 \left( \frac{N_{RB}^{UL,BWP}\left(N_{RB}^{UL,BWP}+1\right)}{2} \right) \right\rceil \text{ LSB}$$

of the Frequency domain resource assignment field.

<Method 2>

In a case where dynamic transmission waveform switching is enabled, the terminal does not assume that resource allocation type 0 is configured. That is, in a case where dynamic transmission waveform switching is enabled, the terminal may always determine resource allocation type 1 as the resource allocation method.

Thus, the number of bits for the Frequency domain resource assignment field is

$$[8]$$

$$\left\lceil \log_2 \left( \frac{N_{RB}^{UL,BWP}\left(N_{RB}^{UL,BWP}+1\right)}{2} \right) \right\rceil$$

bits.

[Antenna Ports Field]

(Case A1)

In a case where the RRC parameter is configured as dmrs-Type=1 and maxLength=1, the number of bits for the Antenna ports field is 3 bits.

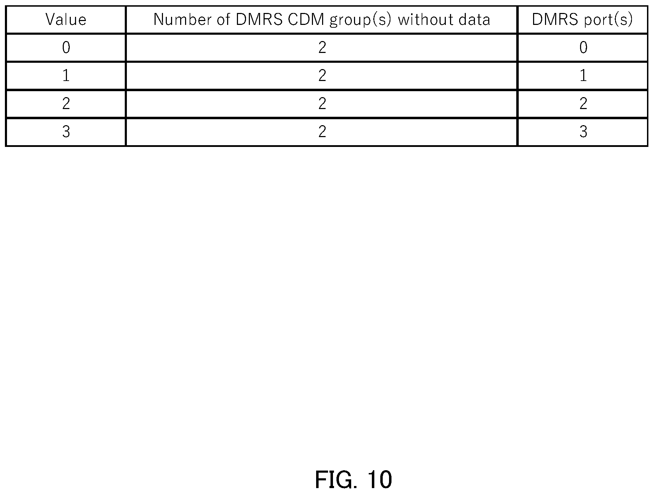

In a case where the use of DFT-s-OFDM for PUSCH transmission is determined according to the embodiments described above, antenna port indication is performed by 2 LSBs (or 2 MSBs) of the Antenna ports field. Further, the terminal performs antenna port determination based on the mapping table given in FIG. 10 and the information in the Antenna ports field.

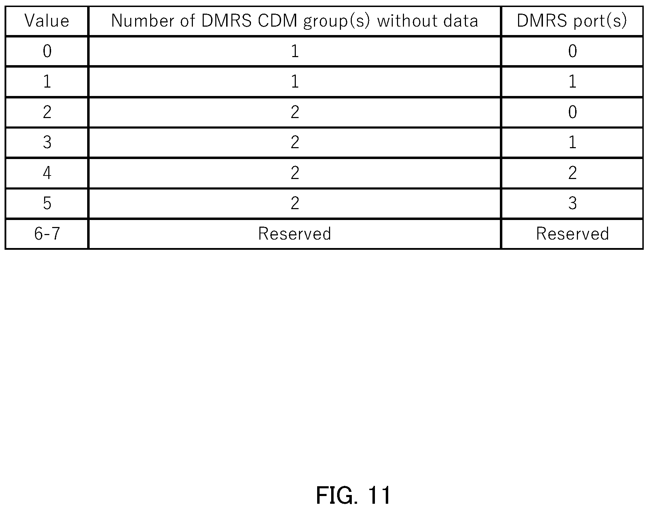

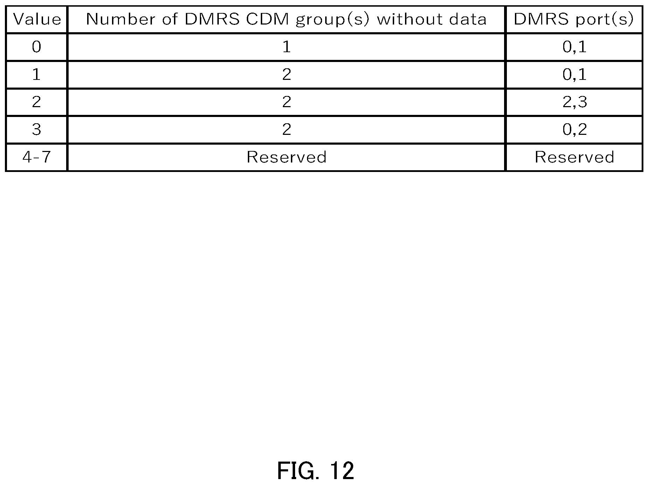

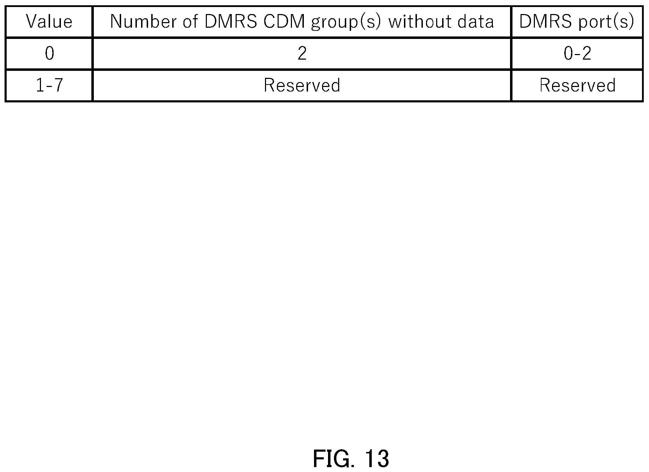

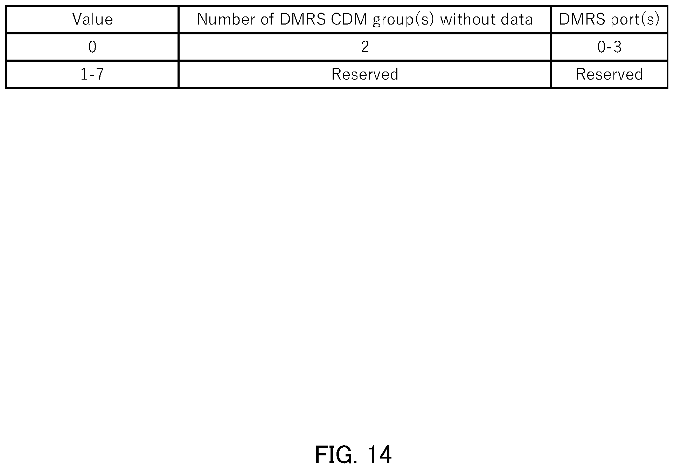

On the other hand, in a case where the use of CP-OFDM for PUSCH transmission is determined according to the embodiments described above, the terminal performs antenna port determination based on the mapping table given in FIG. 11, 12, 13, or 14 and the information in the Antenna ports field for each number of transmission layers of one, two, three, or four.

Note that, Values 0, 1, 2, and 3 and antenna port mapping in FIG. 10 and Values 2, 3, 4, and 5 and antenna port mapping in FIG. 11 are identical. For this reason, in a case where the terminal determines DFT-s-OFDM for PUSCH transmission, the terminal may use the mapping table in FIG. 11 in the same manner as for CP-OFDM instead of using the mapping table in FIG. 10.

(Case A2) In a case where the RRC parameter is configured as dmrs-Type=1 and maxLength=2, the number of bits for the Antenna ports field is 4 bits.

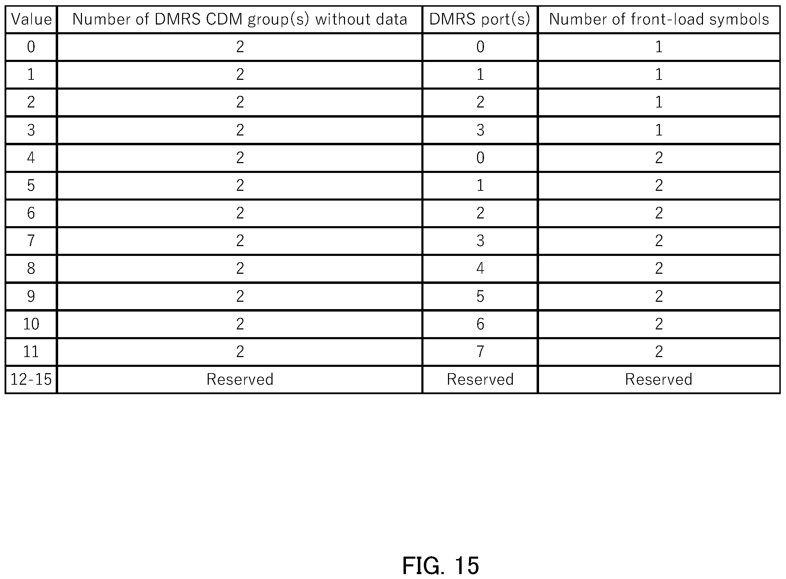

In a case where the terminal determines that DFT-s-OFDM is used for PUSCH transmission according to the embodiments described above, the terminal performs antenna port determination based on the mapping table given in FIG. 15 and the information in the Antenna ports field.

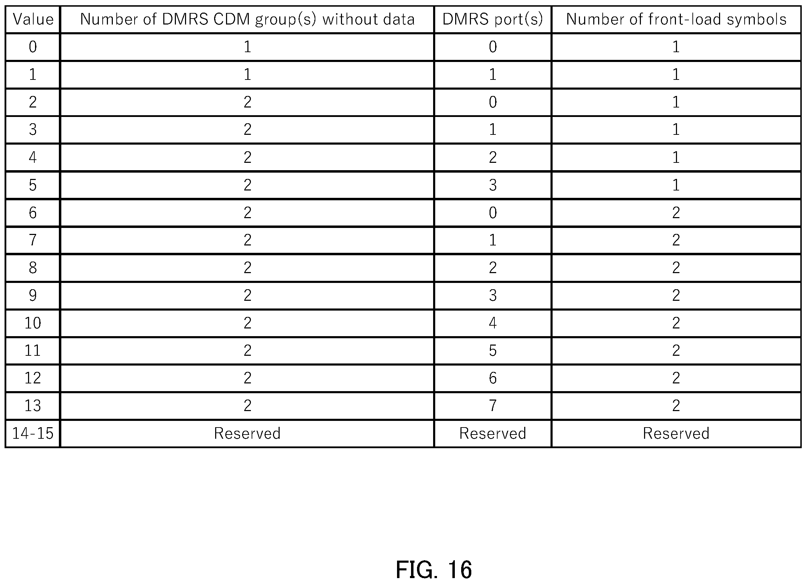

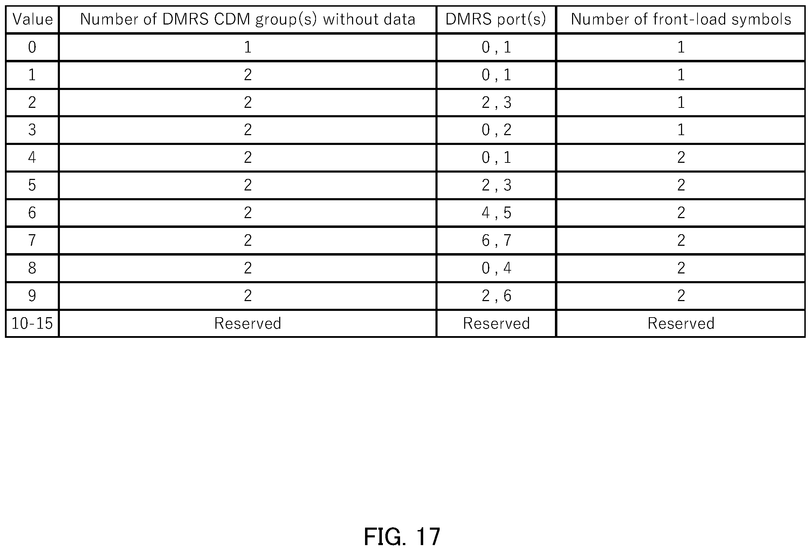

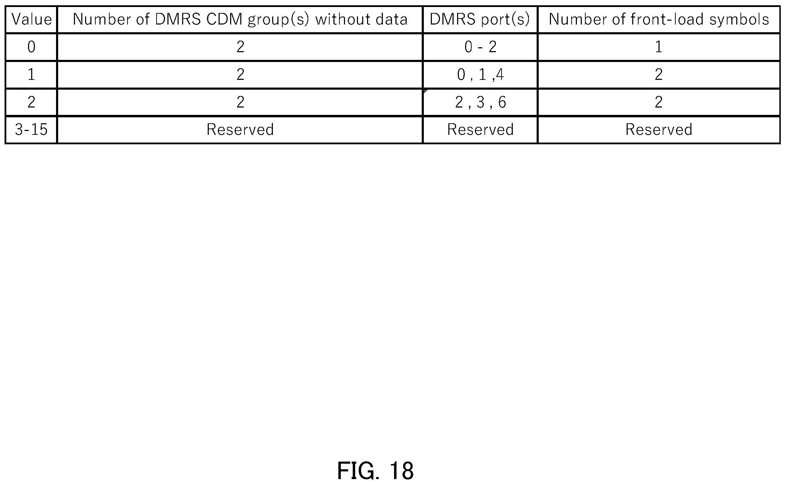

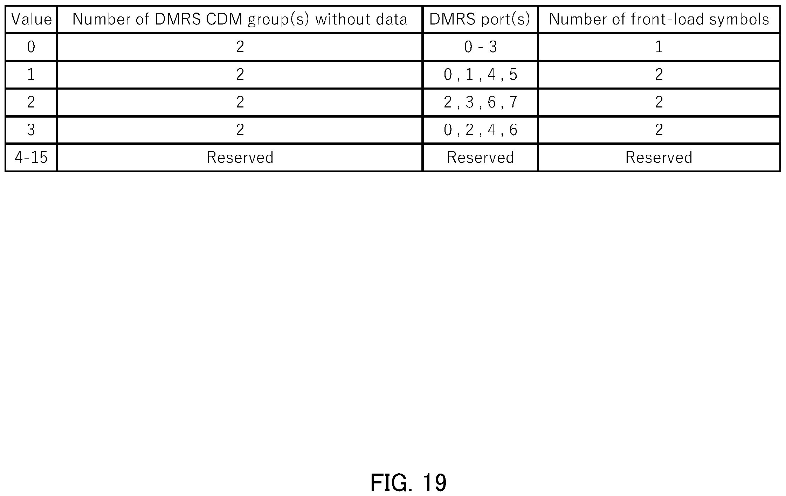

In a case where the terminal determines that CP-OFDM is used for PUSCH transmission according to the embodiments described above, on the other hand, the terminal performs antenna port determination based on the mapping table given in FIG. 16, 17, 18, or 19 and the information in the Antenna ports field for each case where the number of transmission layers is one, two, three, or four.

Note that, Values 0 to 11 and antenna port mapping in FIG. 15 and Values 2 to 13 and antenna port mapping in FIG. 16 are identical. For this reason, in a case where the terminal determines DFT-s-OFDM (or that transform precoding is enabled) for PUSCH transmission, the terminal may use the mapping table in FIG. 16 in the same manner as for CP-OFDM instead of using the mapping table in FIG. 15.

In NR up to Rel. 17, a PUSCH using DFT-s-OFDM for the transmission waveform does not support that the RRC parameter is configured as dmrs-Type=2. For this reason, in a case where dynamic transmission waveform switching is enabled, the terminal may not assume that dmrs-Type=2 is configured. That is, in a case where dynamic transmission waveform switching is enabled, the DMRS type may always be determined as dmrs-Type=1.

In a case where dynamic transmission waveform switching is enabled, on the other hand, the terminal may assume that dmrs-Type=2 is configured. In this case, the DMRS type may be dynamically switched based on the transmission waveform, which is specifically as follows.

(Case B1) In a case where the RRC parameter is configured as dmrs-Type=2 and maxLength=1, the number of bits for the Antenna ports field is 4 bits.

In a case where the use of DFT-s-OFDM for PUSCH transmission is determined according to the embodiments described above, antenna port indication is performed by 2 LSBs (or 2 MSBs) of the Antenna ports field. Further, the terminal performs antenna port determination based on the mapping table given in FIG. 10 and the information in the Antenna ports field.

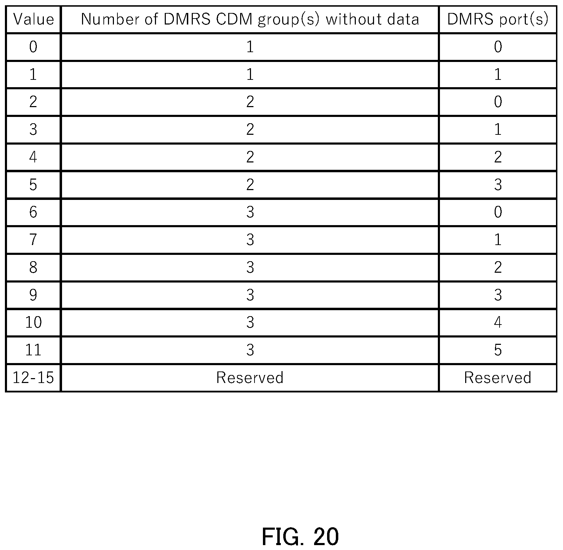

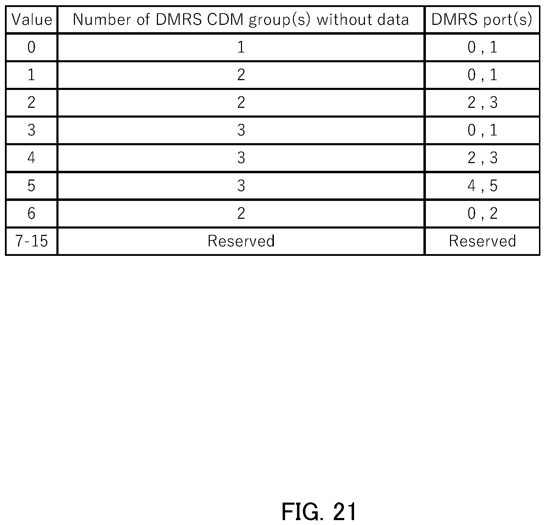

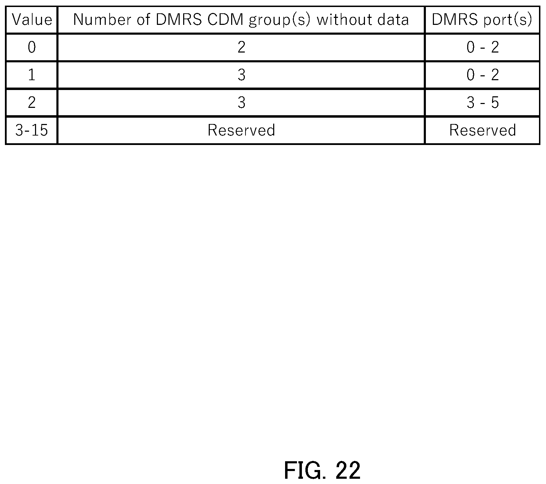

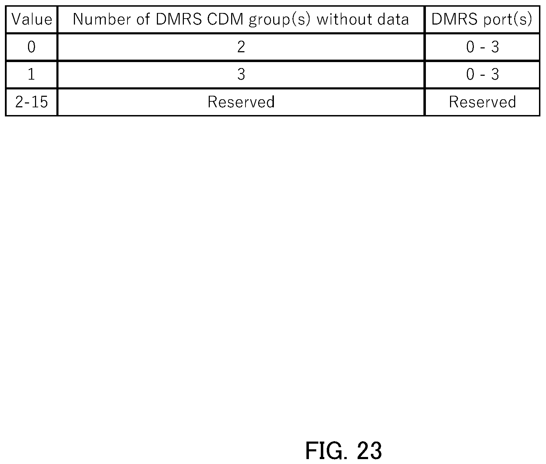

In a case where the terminal determines that CP-OFDM is used for PUSCH transmission according to the embodiments described above, the terminal performs antenna port determination based on the mapping table given in FIG. 20, 21, 22, or 23 and the information in the Antenna ports field for each case where the number of transmission layers is one, two, three, or four.

Note that, Values 0, 1, 2, and 3 and antenna port mapping in FIG. 10 and Values 2, 3, 4, and 5 and antenna port mapping in FIG. 20 are identical. For this reason, in a case where the terminal determines DFT-s-OFDM for PUSCH transmission, the terminal may use the mapping table in FIG. 20 in the same manner as for CP-OFDM instead of using the mapping table in FIG. 10.

(Case B2) In a case where the RRC parameter is configured as dmrs-Type=2 and maxLength=2, the number of bits for the Antenna ports field is 5 bits.

In a case where the use of DFT-s-OFDM for PUSCH transmission is determined according to the embodiments described above, the DMRS type is determined as to be dmrs-Type=1, and antenna port indication is performed by 4 LSBs (or 4 MSBs) of the Antenna ports field. Further, the terminal performs antenna port determination based on the mapping table given in FIG. 15 and the information in the Antenna ports field.

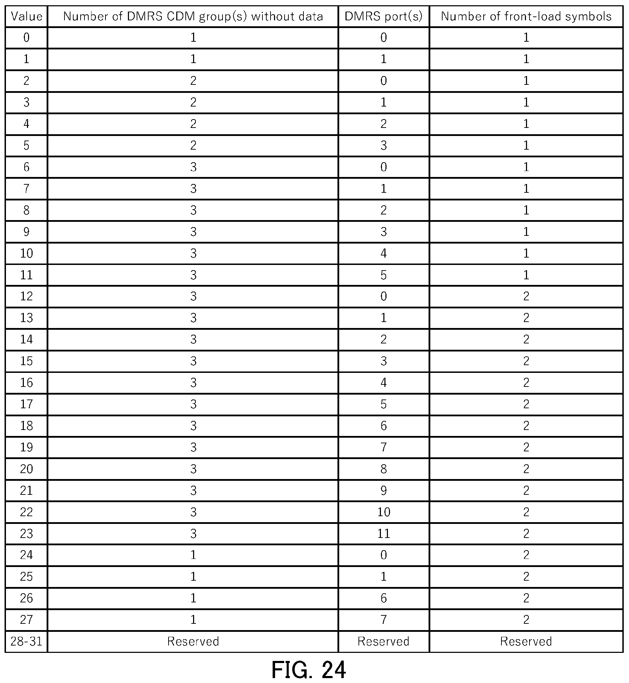

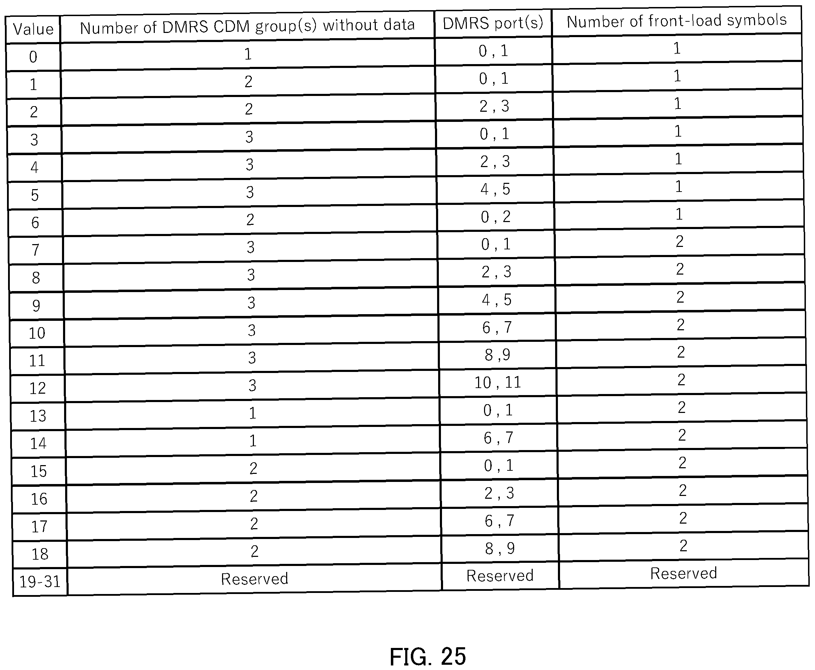

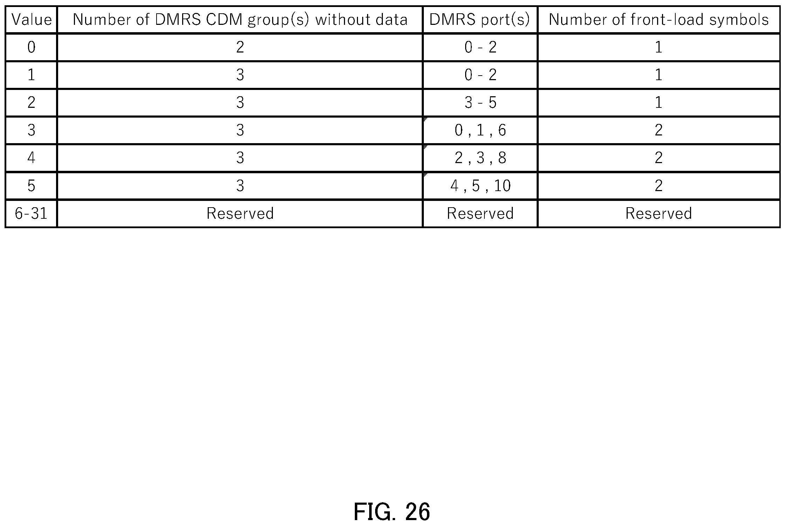

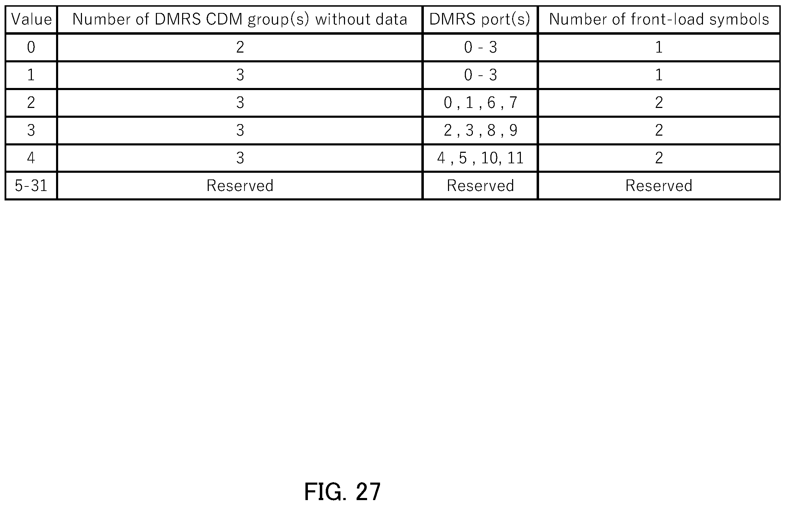

In a case where the terminal determines that CP-OFDM is used for PUSCH transmission according to the embodiments described above, on the other hand, the terminal performs antenna port determination based on the mapping table given in FIG. 24, 25, 26, or 27 and the information in the Antenna ports field for each case where the number of transmission layers is one, two, three, or four.

[PTRS-DMRS Association Field]

Similarly to Step 2 of the embodiments described above, in a case where dynamic transmission waveform switching is enabled, the terminal may configure the size (the number of bits) for the PTRS-DMRS association field in DCI as the same as the number of bits in a case where the CP-OFDM transmission waveform is semi-statically configured.

Specifically, in a case where the RRC parameter PTRS-UplinkConfig is not configured and maxRank=1 is configured, the number of bits for the PTRS-DMRS association field is 0 bit. Otherwise, the number of bits for the PTRS-DMRS association field is 2 bits.

Here, the value of the PTRS-DMRS association field is valid only in a case where the terminal determines that CP-OFDM is used for PUSCH transmission according to the embodiments described above. That is, in a case where the terminal determines that DFT-s-OFDM is used for PUSCH transmission according to the embodiments described above, the terminal does not need to consider the value of the PTRS-DMRS association field.

[DMRS Sequence Initialization Field]

Similarly to Step 2 of the embodiments described above, in a case where dynamic transmission waveform switching is enabled, the terminal may configure the size (the number of bits) for the DMRS sequence initialization field in DCI as the same as the number of bits in a case where the CP-OFDM transmission waveform is semi-statically configured.
Specifically, in a case where dynamic transmission waveform switching is enabled, the number of bits for the PTRS-DMRS association field is 1 bit.

(Other Embodiment 3)

In the embodiments described above, in a case where dynamic transmission waveform switching is enabled, the DCI field size is determined based on the field size of CP-OFDM, but the total DCI size (that is, the number of DCI bits) may be determined based on CP-OFDM. In this case, each DCI field size may be determined based on the transmission waveform determined by dynamic transmission waveform switching. Further, in a case where the total number of bits of all DCI fields is smaller than the DCI size, zero insertion (zero padding) may be applied.
Further, the DCI field that determines the field size based on CP-OFDM when dynamic transmission waveform switching is enabled may be a part of the DCI field (for example, Frequency domain resource assignment) as follows.

·Frequency domain resource assignment
·Precoding information and number of layers
·Antenna ports
·PTRS-DMRS association
·DMRS sequence initialization

Each DCI field size, except for the DCI field that determines the field size based on CP-OFDM, may be determined based on the transmission waveform determined by dynamic transmission waveform switching.

(Variations)

The embodiments described above are not limited to DCI format 0-1 and DCI format 0-2, and may be applied to other DCI formats.
For example, the embodiments described above may be applied to a DCI format other than the DCI format used for the initial access, that is, a DCI format used after a dedicated RRC parameter is configured. Further, the present embodiment may be applied to a DCI format that can indicate a transmission rank larger than Rank 1. Further, the present embodiment may be applied to a DCI format configured by terminal-specific RRC.
The embodiments described above are not limited to DG-PUSCH, and may be applied to PUSCH (Type-2 CG-PUSCH) in which PUSCH is transmitted with a semi-persistent resource allocation by Activation DCI. In this case, the transmission waveform indication described above may be performed based on a field included in the Activation DCI.
In the embodiments described above, the DFT-s-OFDM transmission waveform supports only transmission with the number of layers of one, and the CP-OFDM transmission waveform supports transmission with the number of layers of two or more, but the relationship between the transmission waveform and the number of layers is not limited to the above. For example, the DFT-s-OFDM transmission waveform may support the number of layers of two or more. In that case, the number of layers for switching the transmission waveform may be replaced with N instead of one, the DFT-s-OFDM transmission waveform may support transmission with the number of layers of N or less, and the CP-OFDM transmission waveform may support transmission with the number of layers of N + 1 or more.

(Flowchart)

FIG. 28 is a flowchart of the present invention.
In Embodiment 1, in Step 3, the terminal determines the transmission waveform based solely on the transmission layer(s).
In Embodiment 2, in Step 3, the terminal determines the transmission waveform based on the transmission layer(s) and the TPMI.
In Embodiment 3, in Step 3, the terminal determines the transmission waveform based on the TDRA.
In Embodiment 4, in Step 3, the terminal determines the transmission waveform based on the MCS index.

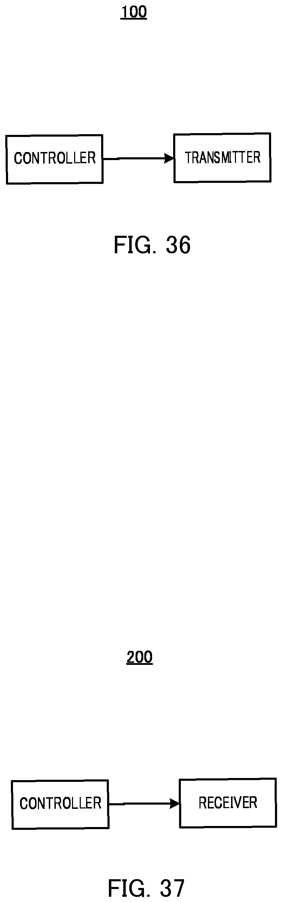

FIG. 36 is a block diagram illustrating an exemplary configuration of a part of base station 100 according to an exemplary embodiment of the present disclosure, and FIG. 37 is a block diagram illustrating an exemplary configuration of a part of terminal 200 according to an exemplary embodiment of the present disclosure.

In base station 100 illustrated in FIG. 36, the controller (corresponding to, for example, the control circuitry) determines, in a case where dynamic switching between a first transmission waveform (for example, DFT-s-OFDM) of an uplink signal (for example, PUSCH) and a second transmission waveform (for example, CP-OFDM) of the uplink signal, where the second transmission waveform has a greater data size than the first transmission waveform, is configured, the field size of control information (for example, DCI) based on the field size in a case where the second transmission waveform is configured. The transmitter (corresponding to, for example, the transmission circuitry) transmits the control information based on the determined field size.

In terminal 200 illustrated in FIG. 37, the controller (for example, corresponding to the control circuitry) determines, in a case where dynamic switching between a first transmission waveform (for example, DFT-s-OFDM) of an uplink signal (for example, PUSCH) and a second transmission waveform (for example, CP-OFDM) of the uplink signal, where the second transmission waveform has a greater data size than the first transmission waveform, is configured, the field size of control information (for example, DCI) based on the field size in a case where the second transmission waveform is configured. The receiver (corresponding to, for example, the reception circuitry) receives the control information based on the determined field size.

(Configuration of Base Station)

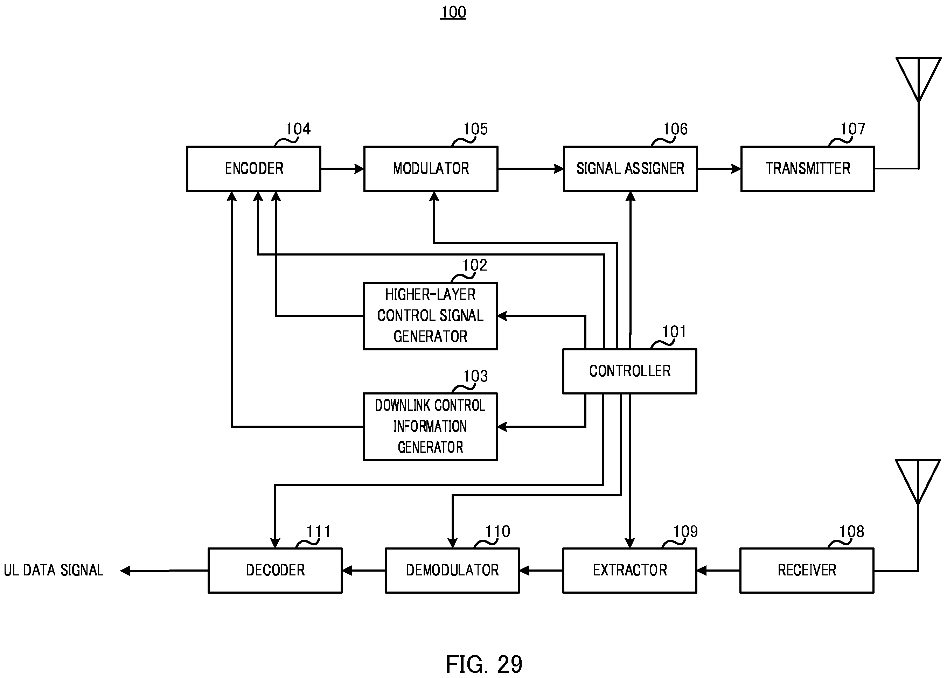

FIG. 29 is a block diagram illustrating a configuration of base station 100 according to an embodiment of the present invention.

Note that, at least one of controller 101, higher-layer control signal generator 102, downlink control information generator 103, encoder 104, modulator 105, signal assigner 106, extractor 109, demodulator 110, and decoder 111 illustrated in FIG. 29 may be included in the controller illustrated in FIG. 36. Further, transmitter 107 illustrated in FIG. 29 may be included in the transmitter illustrated in FIG. 36.

Controller 101 determines information on PUSCH transmission to terminal 200, and outputs the determined information to higher-layer control signal generator or downlink control information generator 103. The information on PUSCH transmission may include, for example, information on the transmission waveform described above, information on Precoding information and number of layers, information on the time domain resource assignment (TDRA), and information on the MCS. Further, controller 101 outputs the determined information to extractor 109, demodulator 110, and decoder 111.

Controller 101 determines the modulation and coding scheme and the radio resource allocation for a downlink signal for transmitting a higher-layer control signal and downlink control information, and outputs the determined information to encoder 104, modulator 105, and signal assigner 106. Further, controller 101 outputs information on the modulation and coding scheme and the radio resource allocation for a data signal and a higher-layer control signal to downlink control information generator 103.

Higher-layer control signal generator 102 generates a higher-layer control signal bit string by using the control information inputted from controller 101, and outputs the higher-layer control signal bit string to encoder 104.

Downlink control information generator 103 generates a DCI bit string by using the control information inputted from controller 101, and outputs the generated DCI bit string to encoder 104. Note that, the control information may be transmitted to a plurality of terminals.

Encoder 104 encodes the bit string obtained from higher-layer control signal generator 102 or the DCI bit string inputted from downlink control information generator 103, and outputs the encoded bit string to modulator 105.

Modulator 105 modulates the encoded bit string received from encoder 104, and outputs the modulated bit string to signal assigner 106.

Signal assigner 106 maps a downlink data signal or a control signal, which is inputted as a symbol string from the modulator 105, to a radio resource indicated by controller 101. Further, signal assigner 106 inputs the signal after the mapping to transmitter 107.

Transmitter 107 performs transmission waveform generation such as OFDM on the signal outputted from signal assigner 106. In the case of an OFDM transmission using a CP, the CP is added after applying Inverse Fast Fourier Transform (IFFT).

Transmitter 107 performs Radio Frequency (RF) processing such as Digital to Analog (D/A) conversion and up-conversion, and transmits a radio signal to terminal 200 via an antenna.

Receiver 108 performs RF processing such as down-conversion or Analog to Digital (A/D) conversion on the uplink transmission transmitted from terminal 200 and received via the antenna. Further, in the case of an OFDM transmission, receiver 108 applies FFT to the received signal to obtain a frequency domain signal, and outputs the frequency domain signal to extractor 109.

Extractor 109 extracts, based on the information received from controller 101, a radio resource portion from the received signal, in which a PUSCH is transmitted, and outputs the radio resource portion to demodulator 110.

Demodulator 110 demodulates the PUSCH based on the information received from controller 101, and outputs the demodulation result to decoder 111.

Decoder 111 performs error correction decoding of the PUSCH by using the information received from controller 101 and the demodulation result obtained from the demodulator, and obtains a decoded reception bit string.

(Configuration of Terminal)

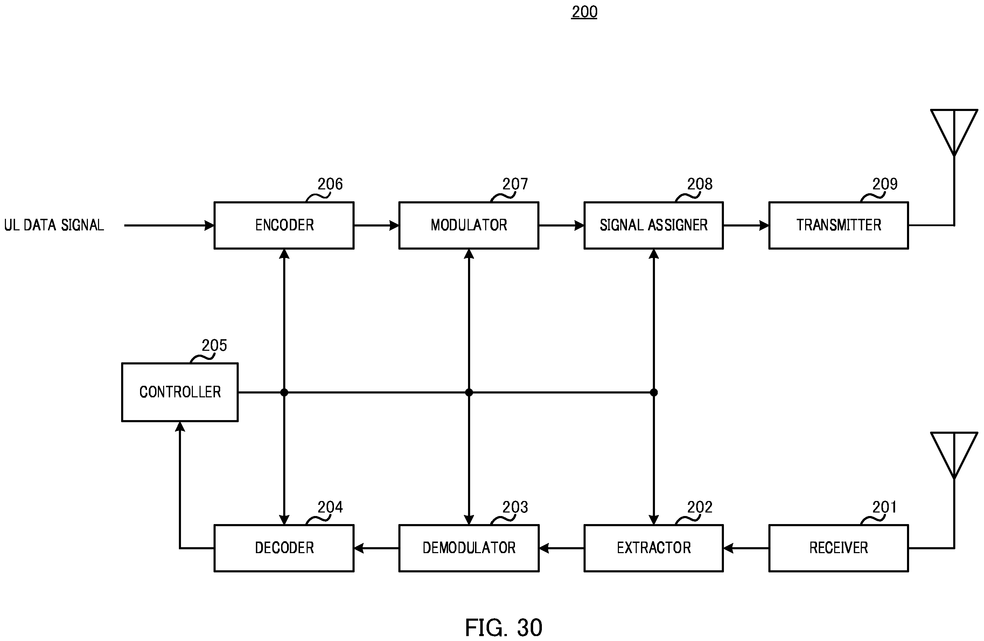

FIG. 30 is a block diagram illustrating a configuration of terminal 200 according to an embodiment of the present invention.

Note that, at least one of extractor 202, demodulator 203, decoder 204, controller 205, encoder 206, modulator 207, and signal assigner 208 illustrated in FIG. 30 may be included in the controller illustrated in FIG. 37. Further, receiver 201 illustrated in FIG. 30 may be included in the receiver illustrated in FIG. 37.

Receiver 201 receives a data signal or a downlink control signal transmitted from base station 100 via an antenna, performs RF processing such as down-conversion or A/D conversion on the received radio signal, and obtains a baseband signal. Further, receiver 201 performs, in a case where receiver 201 receives an OFDM signal, FFT processing on the received signal and converts the received signal into that in the frequency domain.

Extractor 202 uses information on a radio resource in a control signal inputted from controller 205 to extract a radio resource portion including a downlink control signal from the received signal received from receiver 201, and outputs the radio resource portion to demodulator 203. Further, extractor 202 uses information on a radio resource in a data signal inputted from controller 205 to extract a radio resource portion including the data signal, and outputs the radio resource portion to demodulator 203.

Demodulator 203 demodulates, based on information received from controller 205, a PDCCH or PDSCH, and outputs the demodulation result to decoder 204.

Decoder 204 performs error correction decoding of the PDCCH or PDSCH by using information received from controller 205 and the demodulation result obtained from demodulator 203, and obtains higher-layer control information or downlink control information. Decoder 204 outputs the obtained higher-layer control information and downlink control information to controller 205. Further, decoder 204 may generate an acknowledgement (ACK)/negative ACK (NACK) signal from the decoding result of the PDSCH.

Controller 205 identifies a transmission waveform for PUSCH transmission, or the like, from information on PUSCH transmission obtained from the higher-layer control signal and the downlink control information by the method described above, and controls encoder 206, modulator 207, and signal assigner 208. Further, controller 205 outputs the determined information to extractor 202, demodulator 203, and decoder 204.

Encoder 206 encodes an uplink data signal or an uplink control signal from the information inputted from controller 205, and outputs the encoded bit string to modulator 207.

Modulator 207 modulates, from the information inputted from controller 205, the encoded bit sequence received from encoder 206 to generate a modulated symbol string, and outputs the modulated symbol string to signal assigner 208.

Signal assigner 208 maps the signal inputted from modulator 207 to a radio resource indicated by controller 205. Further, signal assigner 208 outputs the signal after mapping to transmitter 209.

Transmitter 209 performs transmission waveform generation such as OFDM on the signal inputted from signal assigner 208. In the case of an OFDM transmission or a DFT-s-OFDM transmission using a CP, the CP is added after IFFT. Note that, in a case where a DFT-s-OFDM transmission waveform is generated, a Discrete Fourier Transformer (DFT) may be added to a stage after the modulator 207 or a stage before the signal assigner 208. Further, transmitter 209 performs RF processing such as D/A conversion and up-conversion on a transmission signal. Further, transmitter 209 transmits a radio signal to base station 100 via an antenna.

Note that, in each of the embodiments described above, PUSCH transmission has been described as the uplink transmission, but the channel used for the uplink transmission is not limited to PUSCH and may be another channel. Further, the type of information to be transmitted is not limited to data, and may be information of another type (e.g., an uplink control signal). Further, an exemplary embodiment of the present disclosure is not limited to the uplink transmission, but may be applied to downlink transmission or sidelink transmission.

Further, in each of the embodiments described above, the transmission waveforms are not limited to CP-OFDM and DFT-s-OFDM, and may be a waveform of multicarrier transmission and another transmission waveform of single carrier transmission.

Further, the parameters such as the number of transmission layers, the transmit precoding matrix (TPMI), the number of slots, the number of symbols, the symbol position, the value of $K_2$, and the number of repetitions, which have been exemplified in the present disclosure, are examples, and may be other values. Further, the tables illustrated in FIGS. 2 to 27, which have been exemplified in the present disclosure, are examples, the values associated with each other in the tables may be other values, and the types of parameters associated with each other in the tables are not limited to these.

The present disclosure may be applied to, for example, communication between terminals, such as sidelink communication.

Further, in the present disclosure, a downlink control channel, a downlink data channel, an uplink control channel, and an uplink data channel are not limited to PDCCH, PDSCH, PUCCH, and PUSCH, respectively, and may be control channels and data channels having other names.

Further, in the present disclosure, the RRC signaling is assumed for the higher layer signaling, but the signaling may be replaced with Medium Access Control (MAC) signaling and indication by a DCI that is physical layer signaling.

(Complement)

Information indicating whether terminal 200 supports the functions, operations, or pieces of processing that have been indicated in the above-mentioned embodiments, and complements may be transmitted (or indicated) from terminal 200 to base station 100, as capability information or a capability parameter for terminal 200, for example.

The capability information may include information elements (IEs) that individually indicate whether terminal 200 supports at least one of the functions, operations, or pieces of processing that have been described in the above-mentioned embodiments, variations, and complements. Alternatively, the capability information may include information elements that indicate whether terminal 200 supports a combination of any two or more of the functions, operations, or pieces of processing that have been described in the above-mentioned embodiments, variations, and complements.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. For example, base station 100 may control uplink-related processing based on the capability information received from terminal 200.

Note that in a case where terminal 200 does not entirely support the functions, operations, or pieces of processing described in the above-mentioned embodiments, variations, and complements, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

The embodiments, the variations, and the complements according to a non-limiting and exemplary embodiment of the present disclosure have been each described, thus far.

(Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

(Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, the base station may be replaced with a terminal. The base station may be a relay apparatus that relays communication between a higher node and a terminal. The base station may be a roadside unit as well.

(Uplink/Downlink/Sidelink)

The present disclosure may be applied to any of uplink, downlink and sidelink. The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

(Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

(Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

(Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

(Frequency Bands)

The present disclosure may be applied to any of a licensed band and an unlicensed band.

(Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.
In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

(Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

<5G NR System Architecture and Protocol Stack>

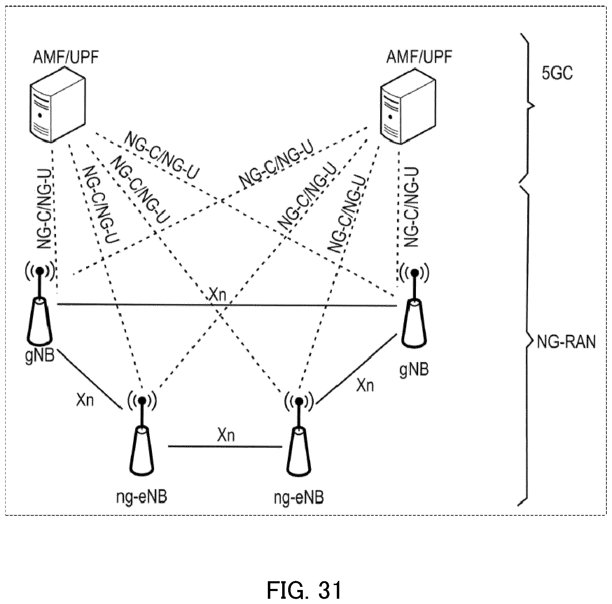

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).
For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 31 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km2 in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing $\Delta f$ are directly related through the formula $\Delta f = 1/Tu$. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

<Functional Split between NG-RAN and 5GC in 5G NR>

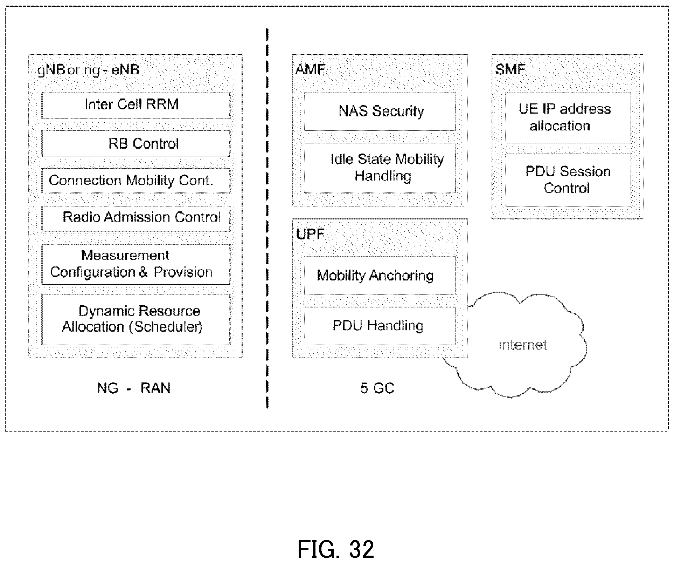

FIG. 32 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:

- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the

EP 4 542 945 A1

information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an operation management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:

- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:

- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:

- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

<RRC Connection Setup and Reconfiguration Procedure>

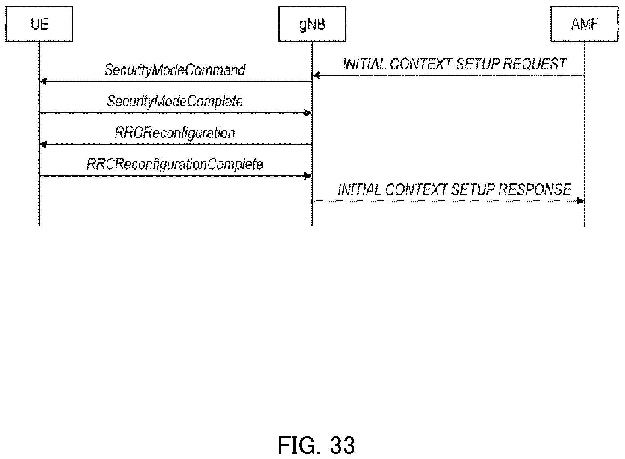

FIG. 33 illustrates some interactions between a UE, gNB, and AMF (a 5GC Entity) performed in the context of a

24

transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityMode-Command message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

<Usage Scenarios of IMT for 2020 and beyond>

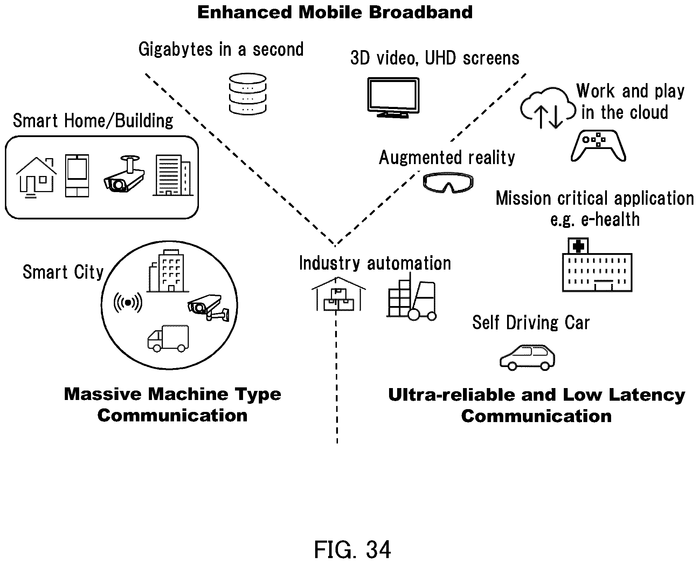

FIG. 34 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 34 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10-6 level), higher availability, packet sizes of up to 256 bytes, time synchronization up to the extent of a few $\mu$s (where the value can be one or a few $\mu$s depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 33. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

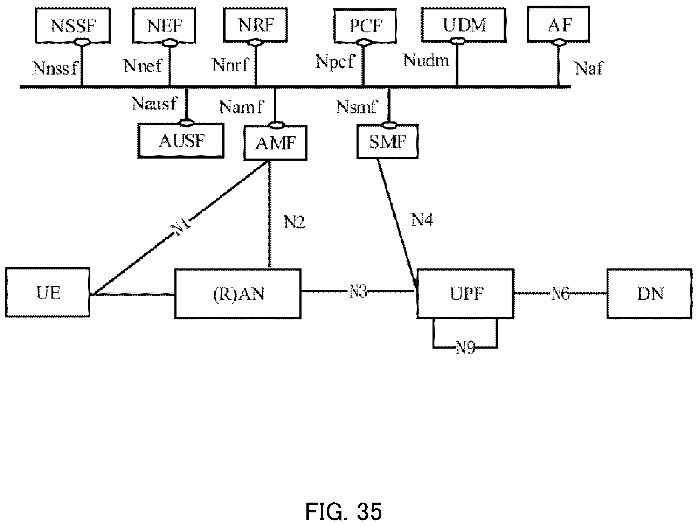

FIG. 35 illustrates a 5G NR non-roaming reference architecture (see TS 23.501 v16.1.0, section 4.23). An Application Function (AF) (e.g., an external application server hosting 5G services, exemplarily described in FIG. 34) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 35 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

In the description of the present disclosure, the term ending with a suffix, such as "-er" "-or" or "-ar" may be interchangeably replaced with another term, such as "circuit (circuitry)," "device," "unit," or "module."

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a Field Programmable Gate Array (FPGA) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smartphone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

(1) A terminal according to an exemplary embodiment of the present disclosure determines, in a case where dynamic switching between a first transmission waveform of an uplink signal and a second transmission waveform of the uplink signal, where the second transmission waveform has a greater data size than the first transmission waveform, is configured, a field size of control information based on the field size in a case where the second transmission waveform is configured.

(2) In an exemplary embodiment of the present disclosure, the terminal of (1) determines a transmission waveform of the uplink signal based on a value indicated by a field included in the control information.

(3) In an exemplary embodiment of the present disclosure, the terminal of (2) determines the transmission waveform of the uplink signal based on a number of transmission layers indicated by a precoding information and number of layers field or an SRI field, where the precoding information and number of layers field and the SRI field are included in the control information.

(4) In an exemplary embodiment of the present disclosure, the terminal of (2) determines the transmission waveform of the uplink signal based on a number of transmission layers and a transmit precoding matrix, where the number of transmission layers and the transmit precoding matrix is indicated by a precoding information and number of layers field or an SRI field and the precoding information and number of layers field and the SRI field are included in the control information.

(5) In an exemplary embodiment of the present disclosure, the terminal of (2) determines the transmission waveform of the uplink signal based on an index indicated by a time domain resource assignment (TDRA) field or a frequency domain resource assignment (FDRA) field, where the TDRA field and the FDRA field are included in the control information.

(6) In an exemplary embodiment of the present disclosure, the terminal of (2) determines the transmission waveform of the uplink signal based on an index indicated by a modulation and coding scheme (MCS) field included in the control information.

(7) In an exemplary embodiment of the present disclosure, in a case where the index of (6) is the index in which a modulation order and a target code rate are determined, the transmission waveform of the uplink signal is determined based on an association of the index with the transmission waveform of the uplink signal, and in a case where the index of (6) is the index in which only the modulation order is determined, the transmission waveform of the uplink signal is determined based on the association of an index other than the index with the transmission waveform of the uplink signal.

(8) In an exemplary embodiment of the present disclosure, in a case where the number of transmission layers is one, the terminal of (3) determines that the transmission waveform of the uplink signal is a waveform of single carrier transmission, and in a case where the number of transmission layers is two or more, the terminal of (3) determines that the transmission waveform of the uplink signal is a waveform of a multicarrier transmission.

(9) In an exemplary embodiment of the present disclosure, in a case where the number of transmission layers is one, the terminal of (4) determines the transmission waveform of the uplink signal based on a value indicating the transmit precoding matrix, and in a case where the number of transmission layers is two or more, the terminal of (4) determines that the transmission waveform of the uplink signal is a waveform of multicarrier transmission.

(10) In an exemplary embodiment of the present disclosure, in the terminal of (9), an association of the value indicating the transmit precoding matrix with the transmission waveform of the uplink signal is configured by higher layer signaling.

(11) In an exemplary embodiment of the present disclosure, the terminal of (5) determines, based on the index, a time domain resource assignment candidate associated with the index.

(12) In an exemplary embodiment of the present disclosure, in the terminal of (11), an association of a value of the index with the transmission waveform of the uplink signal is configured by higher layer signaling.

(13) In an exemplary embodiment of the present disclosure, in the terminal of (6), an association of a value of the index with the transmission waveform of the uplink signal is configured by higher layer signaling.

(14) In an exemplary embodiment of the present disclosure, the terminal of (13) receives information on a threshold for the index for switching the transmission waveform of the uplink signal.

(15) A base station according to an exemplary embodiment of the present disclosure determines, in a case where dynamic switching between a first transmission waveform of an uplink signal and a second transmission waveform of the uplink signal, where the second transmission waveform has a greater data size than the first transmission waveform, is configured, a field size of control information based on the field size in a case where the second transmission waveform is configured.

(16) A communication method according to an exemplary embodiment of the present disclosure includes: determining, by a terminal, in a case where dynamic switching between a first transmission waveform of an uplink signal and a second transmission waveform of the uplink signal, where the second transmission waveform has a greater data size than the first transmission waveform, is configured, a field size of control information based on the field size in a case where the second transmission waveform is configured; and receiving, by the terminal, the control information based on the field size.

(17) A communication method according to an exemplary embodiment of the present disclosure includes: determining, by a base station, in a case where dynamic switching between a first transmission waveform of an uplink signal and a second transmission waveform of the uplink signal, where the second transmission waveform has a greater data size than the first transmission waveform, is configured, a field size of control information based on the field size in a case where the second transmission waveform is configured; and transmitting, by the base station, the control information based on the field size.

The disclosures of Japanese Patent Application No. 2022-095920, filed on June 14, 2022, and Japanese Patent Application No. 2022-158782, filed on September 30, 2022, each including the specification, drawings, and abstract, are incorporated herein by reference in their entirety.

Industrial Applicability

An exemplary embodiment of the present disclosure is useful for radio communication systems.

Reference Signs List

100 Base station
101, 205 Controller
102 Higher-layer control signal generator
103 Downlink control information generator
104, 206 Encoder
105, 207 Modulator
106, 208 Signal assigner
107, 209 Transmitter
108, 201 Receiver
109, 202 Extractor
110, 203 Demodulator
111, 204 Decoder
200 Terminal

**Claims**

1. A terminal, comprising:

   control circuitry, which, in operation, determines, in a case where dynamic switching between a first transmission waveform of an uplink signal and a second transmission waveform of the uplink signal is configured, a field size of control information based on the field size in a case where the second transmission waveform is configured, the second transmission waveform having a greater data size than the first transmission waveform; and reception circuitry, which, in operation, receives the control information based on the field size.

2. The terminal according to claim 1, wherein
   the control circuitry determines a transmission waveform of the uplink signal based on a value indicated by a field included in the control information.

3. The terminal according to claim 2, wherein
   the control circuitry determines the transmission waveform of the uplink signal based on a number of transmission layers indicated by a precoding information and number of layers field or an SRI field, the precoding information and number of layers field and the SRI field being included in the control information.

4. The terminal according to claim 2, wherein
   the control circuitry determines the transmission waveform of the uplink signal based on a number of transmission layers and a transmit precoding matrix, the number of transmission layers and the transmit precoding matrix being indicated by a precoding information and number of layers field or an SRI field, the precoding information and number of layers field and the SRI field being included in the control information.

5. The terminal according to claim 2, wherein
   the control circuitry determines the transmission waveform of the uplink signal based on an index indicated by a time domain resource assignment (TDRA) field or a frequency domain resource assignment (FDRA) field, the TDRA field and the FDRA field being included in the control information.

6. The terminal according to claim 2, wherein
   the control circuitry determines the transmission waveform of the uplink signal based on an index indicated by a modulation and coding scheme (MCS) field included in the control information.

7. The terminal according to claim 6, wherein:

   in a case where the index is the index in which a modulation order and a target code rate are determined, the control circuitry determines the transmission waveform of the uplink signal based on an association of the index with the transmission waveform of the uplink signal, and
   in a case where the index is the index in which only the modulation order is determined, the control circuitry determines the transmission waveform of the uplink signal based on the association of an index other than the index with the transmission waveform of the uplink signal.

8. The terminal according to claim 3, wherein:

   in a case where the number of transmission layers is one, the control circuitry determines that the transmission waveform of the uplink signal is a waveform of single carrier transmission, and
   in a case where the number of transmission layers is two or more, the control circuitry determines that the transmission waveform of the uplink signal is a waveform of a multicarrier transmission.

9. The terminal according to claim 4, wherein:

   in a case where the number of transmission layers is one, the control circuitry determines the transmission waveform of the uplink signal based on a value indicating the transmit precoding matrix, and
   in a case where the number of transmission layers is two or more, the control circuitry determines that the transmission waveform of the uplink signal is a waveform of multicarrier transmission.

10. The terminal according to claim 9, wherein

an association of the value indicating the transmit precoding matrix with the transmission waveform of the uplink signal is configured by higher layer signaling.

11. The terminal according to claim 5, wherein
the control circuitry determines, based on the index, a time domain resource assignment candidate associated with the index.

12. The terminal according to claim 11, wherein
an association of a value of the index with the transmission waveform of the uplink signal is configured by higher layer signaling.

13. The terminal according to claim 6, wherein
an association of a value of the index with the transmission waveform of the uplink signal is configured by higher layer signaling.

14. The terminal according to claim 13, wherein
the reception circuitry receives information on a threshold for the index for switching the transmission waveform of the uplink signal.

15. A base station, comprising:

control circuitry, which, in operation, determines, in a case where dynamic switching between a first transmission waveform of an uplink signal and a second transmission waveform of the uplink signal is configured, a field size of control information based on the field size in a case where the second transmission waveform is configured, the second transmission waveform having a greater data size than the first transmission waveform; and
transmission circuitry, which, in operation, transmits the control information based on the field size.

16. A communication method, comprising:

determining, by a terminal, in a case where dynamic switching between a first transmission waveform of an uplink signal and a second transmission waveform of the uplink signal is configured, a field size of control information based on the field size in a case where the second transmission waveform is configured, the second transmission waveform having a greater data size than the first transmission waveform; and
receiving, by the terminal, the control information based on the field size.

17. A communication method, comprising:

determining, by a base station, in a case where dynamic switching between a first transmission waveform of an uplink signal and a second transmission waveform of the uplink signal is configured, a field size of control information based on the field size in a case where the second transmission waveform is configured, the second transmission waveform having a greater data size than the first transmission waveform; and
transmitting, by the base station, the control information based on the field size.

| | If higher layer parameter is configured | If higher layer parameter is not configured |
|---|---|---|
| Msg.3 PUSCH | Based on msg3-transformPrecoder | N/A |
| Msg.A PUSCH | Based on msgA-transformPrecoder | Based on msg3-transformPrecoder |
| DG-PUSCH scheduled by DCI format 0-0 | Based on msg3-transformPrecoder | |
| DG-PUSCH scheduled by DCI format 0-1/0-2 | Based on transformPrecoder in pusch-Config | Based on msg3-transformPrecoder |
| CG-PUSCH | Based on transformPrecoder in configuredGrantConfig | Based on msg3-transformPrecoder |

FIG. 1

EP 4 542 945 A1

| Bit field mapped to index | codebbokSubset = fullyAndPartialAndNonCoherent | Bit field mapped to index | codebbokSubset = partialAndNonCoherent | Bit field mapped to index | codebookSubset = nonCoherent |
|---|---|---|---|---|---|
| 0 | 1 layer: TPMI = 0 | 0 | 1 layer: TPMI = 0 | 0 | 1 layer: TPMI = 0 |
| 1 | 1 layer: TPMI = 1 | 1 | 1 layer: TPMI = 1 | 1 | 1 layer: TPMI = 1 |
| ... | | | ... | ... | |
| 3 | 1 layer: TPMI = 3 | 3 | 1 layer: TPMI = 3 | 3 | 1 layer: TPMI = 3 |
| 4 | 2 layers: TPMI = 0 | 4 | 2 layers: TPMI = 0 | 4 | 2 layers: TPMI = 0 |
| ... | ... | ... | ... | ... | ... |
| 9 | 2 layers: TPMI = 5 | 9 | 2 layers: TPMI = 5 | 9 | 2 layers: TPMI = 5 |
| 10 | 3 layers: TPMI = 0 | 10 | 3 layers: TPMI = 0 | 10 | 3 layers: TPMI = 0 |
| 11 | 4 layers: TPMI = 5 | 11 | 4 layers: TPMI = 5 | 11 | 4 layers: TPMI = 5 |
| 12 | 1 layer: TPMI = 4 | 12 | 1 layer: TPMI = 4 | 12 - 15 | reserved |
| ... | ... | ... | ... | | |
| 19 | 1 layer: TPMI = 11 | 19 | 1 layer: TPMI = 11 | | |
| 20 | 2 layers: TPMI = 6 | 20 | 2 layers: TPMI = 6 | | |
| ... | ... | ... | ... | | |
| 27 | 2 layers: TPMI = 13 | 27 | 2 layers: TPMI = 13 | | |
| 28 | 3 layers: TPMI = 1 | 28 | 3 layers: TPMI = 1 | | |
| 29 | 3 layers: TPMI = 2 | 29 | 3 layers: TPMI = 2 | | |
| 30 | 4 layers: TPMI = 1 | 30 | 4 layers: TPMI = 1 | | |
| 31 | 4 layers: TPMI = 2 | 31 | 4 layers: TPMI = 2 | | |
| 32 | 1 layer: TPMI = 12 | | | | |
| ... | ... | | | | |
| 47 | 1 layer: TPMI = 27 | | | | |
| 48 | 2 layers: TPMI = 14 | | | | |
| ... | ... | | | | |
| 55 | 2 layers: TPMI = 21 | | | | |
| 56 | 3 layers: TPMI = 3 | | | | |
| ... | ... | | | | |
| 59 | 3 layers: TPMI = 6 | | | | |
| 60 | 4 layers: TPMI = 3 | | | | |
| 61 | 4 layers: TPMI = 4 | | | | |
| 62 - 63 | reserved | | | | |

FIG. 2

EP 4 542 945 A1

| Bit field mapped to index | codebbokSubset = fullyAndPartialAndNonCoherent | Bit field mapped to index | codebbokSubset = partialAndNonCoherent | Bit field mapped to index | codebookSubset = nonCoherent |
|---|---|---|---|---|---|
| 0 | 1 layer: TPMI = 0 | 0 | 1 layer: TPMI = 0 | 0 | 1 layer: TPMI = 0 |
| 1 | 1 layer: TPMI = 1 | 1 | 1 layer: TPMI = 1 | 1 | 1 layer: TPMI = 1 |
| ... | ... | ... | ... | ... | ... |
| 3 | 1 layer: TPMI = 3 | 3 | 1 layer: TPMI = 3 | 3 | 1 layer: TPMI = 3 |
| 4 | 1 layer: TPMI = 4 | 4 | 1 layer: TPMI = 4 | | |
| ... | ... | ... | ... | | |
| 11 | 1 layer: TPMI = 11 | 11 | 1 layer: TPMI = 11 | | |
| 12 | 1 layer: TPMI = 12 | 12 - 15 | reserved | | |
| ... | ... | | | | |
| 27 | 1 layer: TPMI = 27 | | | | |
| 28 - 31 | reserved | | | | |

FIG. 3

EP 4 542 945 A1

| Bit field mapped to index | codebbokSubset = PartialAndNonCoherent | Bit field mapped to index | codebbokSubset = nonCoherent |
|---|---|---|---|
| 0 | 1 layer: TPMI = 0 | 0 | 1 layer: TPMI = 0 |
| 1 | 1 layer: TPMI = 1 | 1 | 1 layer: TPMI = 1 |
| ... | | ... | |
| 3 | 1 layer: TPMI = 3 | 3 | 1 layer: TPMI = 3 |
| 4 | 2 layers: TPMI = 0 | 4 | 2 layers: TPMI = 0 |
| ... | ... | ... | ... |
| 9 | 2 layers: TPMI = 5 | 9 | 2 layers: TPMI = 5 |
| 10 | 1 layer: TPMI = 13 | 10 | 1 layer: TPMI =13 |
| 11 | 2 layers: TPMI = 6 | 11 | 2 layers: TPMI = 6 |
| 12 | 1 layer: TPMI = 4 | 12 - 15 | Reserved |
| ... | ... | | |
| 20 | 1 layer: TPMI = 12 | | |
| 21 | 1 layer: TPMI = 14 | | |
| 22 | 1 layer: TPMI = 15 | | |
| 23 | 2 layers: TPMI = 7 | | |
| ... | ... | | |
| 29 | 2 layers: TPMI = 13 | | |
| 30 - 31 | Reserved | | |

FIG. 4

EP 4 542 945 A1

| Bit field mapped to index | codebbokSubset = PartialAndNonCoherent | Bit field mapped to index | codebbokSubset = nonCoherent |
|---|---|---|---|
| 0 | 1 layer: TPMI = 0 | 0 | 1 layer: TPMI = 0 |
| 1 | 1 layer: TPMI = 1 | 1 | 1 layer: TPMI = 1 |
| ... | | ... | |
| 3 | 1 layer: TPMI = 3 | 3 | 1 layer: TPMI = 3 |
| 4 | 2 layers: TPMI = 0 | 4 | 2 layers: TPMI = 0 |
| ... | ... | ... | ... |
| 9 | 2 layers: TPMI = 5 | 9 | 2 layers: TPMI = 5 |
| 10 | 3 layers: TPMI = 0 | 10 | 3 layers: TPMI =0 |
| 11 | 4 layers: TPMI = 0 | 11 | 4 layers: TPMI = 0 |
| 12 | 1 layer: TPMI = 13 | 12 | 1 layer: TPMI = 13 |
| 13 | 2 layers: TPMI = 6 | 13 | 2 layers: TPMI = 6 |
| 14 | 3 layers: TPMI = 1 | 14 | 3 layers: TPMI = 1 |
| 15 | 1 layer: TPMI = 4 | 15 | Reserved |
| ... | ... | | |
| 23 | 1 layer: TPMI = 12 | | |
| 24 | 1 layer: TPMI = 14 | | |
| 25 | 1 layer: TPMI = 15 | | |
| 26 | 2 layers: TPMI = 7 | | |
| ... | ... | | |
| 32 | 2 layers: TPMI = 13 | | |
| 33 | 3 layers: TPMI = 2 | | |
| 34 | 4 layers: TPMI = 1 | | |
| 35 | 4 layers TPMI = 2 | | |
| 36 - 63 | Reserved | | |

FIG. 5

| Bit field mapped to index | codebbokSubset = PartialAndNonCoherent | Bit field mapped to index | codebbokSubset = nonCoherent |
|---|---|---|---|
| 0 | 1 layer: TPMI = 0 | 0 | 1 layer: TPMI = 0 |
| 1 | 1 layer: TPMI = 1 | 1 | 1 layer: TPMI = 1 |
| ... |  | ... |  |
| 3 | 1 layer: TPMI = 3 | 3 | 1 layer: TPMI = 3 |
| 4 | 1 layer: TPMI = 13 | 4 | 1 layer: TPMI = 13 |
| 5 | 1 layer: TPMI = 4 | 5 - 7 | Reserved |
| ... | ... |  |  |
| 13 | 1 layer: TPMI = 12 |  |  |
| 14 | 1 layer: TPMI = 14 |  |  |
| 15 | 1 layer: TPMI = 15 |  |  |

FIG. 6

| Bit field mapped to index | codebbokSubset = fullyAndPartialAndNonCoherent | Bit field mapped to index | codebookSubset = nonCoherent |
|---|---|---|---|
| 0 | 1 layer: TPMI = 0 | 0 | 1 layer: TPMI = 0 |
| 1 | 1 layer: TPMI = 1 | 1 | 1 layer: TPMI = 1 |
| 2 | 2 layers: TPMI = 0 | 2 | 2 layers: TPMI = 0 |
| 3 | 1 layer: TPMI = 2 | 3 | reserved |
| 4 | 1 layer: TPMI = 3 | | |
| 5 | 1 layer: TPMI = 4 | | |
| 6 | 1 layer: TPMI = 5 | | |
| 7 | 2 layers: TPMI = 1 | | |
| 8 | 2 layers: TPMI = 2 | | |
| 9 - 15 | reserved | | |

FIG. 7

EP 4 542 945 A1

| Bit field mapped to index | codebbokSubset = fullyAndPartialAndNonCoherent | Bit field mapped to index | codebookSubset = nonCoherent |
|---|---|---|---|
| 0 | 1 layer: TPMI = 0 | 0 | 1 layer: TPMI = 0 |
| 1 | 1 layer: TPMI = 1 | 1 | 1 layer: TPMI = 1 |
| 2 | 1 layer: TPMI = 2 | | |
| 3 | 1 layer: TPMI = 3 | | |
| 4 | 1 layer: TPMI = 4 | | |
| 5 | 1 layer: TPMI = 5 | | |
| 6 - 7 | reserved | | |

FIG. 8

EP 4 542 945 A1

EP 4 542 945 A1

| Bit field mapped to index | codebookSubset = nonCoherent |
|---|---|
| 0 | 1 layer: TPMI = 0 |
| 1 | 1 layer: TPMI = 1 |
| 2 | 2 layers: TPMI = 0 |
| 3 | 1 layer: TPMI = 2 |

FIG. 9

| Value | Number of DMRS CDM group(s) without data | DMRS port(s) |
|-------|------------------------------------------|--------------|
| 0 | 2 | 0 |
| 1 | 2 | 1 |
| 2 | 2 | 2 |
| 3 | 2 | 3 |

FIG. 10

| Value | Number of DMRS CDM group(s) without data | DMRS port(s) |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6-7 | Reserved | Reserved |

FIG. 11

| Value | Number of DMRS CDM group(s) without data | DMRS port(s) |
|---|---|---|
| 0 | 1 | 0,1 |
| 1 | 2 | 0,1 |
| 2 | 2 | 2,3 |
| 3 | 2 | 0,2 |
| 4-7 | Reserved | Reserved |

FIG. 12

EP 4 542 945 A1

| Value | Number of DMRS CDM group(s) without data | DMRS port(s) |
|---|---|---|
| 0 | 2 | 0-2 |
| 1-7 | Reserved | Reserved |

FIG. 13

| Value | Number of DMRS CDM group(s) without data | DMRS port(s) |
|---|---|---|
| 0 | 2 | 0-3 |
| 1-7 | Reserved | Reserved |

FIG. 14

EP 4 542 945 A1

| Value | Number of DMRS CDM group(s) without data | DMRS port(s) | Number of front-load symbols |
|---|---|---|---|
| 0 | 2 | 0 | 1 |
| 1 | 2 | 1 | 1 |
| 2 | 2 | 2 | 1 |
| 3 | 2 | 3 | 1 |
| 4 | 2 | 0 | 2 |
| 5 | 2 | 1 | 2 |
| 6 | 2 | 2 | 2 |
| 7 | 2 | 3 | 2 |
| 8 | 2 | 4 | 2 |
| 9 | 2 | 5 | 2 |
| 10 | 2 | 6 | 2 |
| 11 | 2 | 7 | 2 |
| 12-15 | Reserved | Reserved | Reserved |

FIG. 15

| Value | Number of DMRS CDM group(s) without data | DMRS port(s) | Number of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 2 | 0 | 2 |
| 7 | 2 | 1 | 2 |
| 8 | 2 | 2 | 2 |
| 9 | 2 | 3 | 2 |
| 10 | 2 | 4 | 2 |
| 11 | 2 | 5 | 2 |
| 12 | 2 | 6 | 2 |
| 13 | 2 | 7 | 2 |
| 14-15 | Reserved | Reserved | Reserved |

FIG. 16

| Value | Number of DMRS CDM group(s) without data | DMRS port(s) | Number of front-load symbols |
|---|---|---|---|
| 0 | 1 | 0 , 1 | 1 |
| 1 | 2 | 0 , 1 | 1 |
| 2 | 2 | 2 , 3 | 1 |
| 3 | 2 | 0 , 2 | 1 |
| 4 | 2 | 0 , 1 | 2 |
| 5 | 2 | 2 , 3 | 2 |
| 6 | 2 | 4 , 5 | 2 |
| 7 | 2 | 6 , 7 | 2 |
| 8 | 2 | 0 , 4 | 2 |
| 9 | 2 | 2 , 6 | 2 |
| 10-15 | Reserved | Reserved | Reserved |

FIG. 17

| Value | Number of DMRS CDM group(s) without data | DMRS port(s) | Number of front-load symbols |
|---|---|---|---|
| 0 | 2 | 0 - 2 | 1 |
| 1 | 2 | 0 , 1 ,4 | 2 |
| 2 | 2 | 2 , 3 , 6 | 2 |
| 3-15 | Reserved | Reserved | Reserved |

FIG. 18

| Value | Number of DMRS CDM group(s) without data | DMRS port(s) | Number of front-load symbols |
|---|---|---|---|
| 0 | 2 | 0 - 3 | 1 |
| 1 | 2 | 0 , 1 , 4 , 5 | 2 |
| 2 | 2 | 2 , 3 , 6 , 7 | 2 |
| 3 | 2 | 0 , 2 , 4 , 6 | 2 |
| 4-15 | Reserved | Reserved | Reserved |

FIG. 19

| Value | Number of DMRS CDM group(s) without data | DMRS port(s) |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6 | 3 | 0 |
| 7 | 3 | 1 |
| 8 | 3 | 2 |
| 9 | 3 | 3 |
| 10 | 3 | 4 |
| 11 | 3 | 5 |
| 12-15 | Reserved | Reserved |

FIG. 20

| Value | Number of DMRS CDM group(s) without data | DMRS port(s) |
|-------|------------------------------------------|--------------|
| 0 | 1 | 0 , 1 |
| 1 | 2 | 0 , 1 |
| 2 | 2 | 2 , 3 |
| 3 | 3 | 0 , 1 |
| 4 | 3 | 2 , 3 |
| 5 | 3 | 4 , 5 |
| 6 | 2 | 0 , 2 |
| 7-15 | Reserved | Reserved |

FIG. 21

| Value | Number of DMRS CDM group(s) without data | DMRS port(s) |
|---|---|---|
| 0 | 2 | 0 - 2 |
| 1 | 3 | 0 - 2 |
| 2 | 3 | 3 - 5 |
| 3-15 | Reserved | Reserved |

FIG. 22

| Value | Number of DMRS CDM group(s) without data | DMRS port(s) |
|---|---|---|
| 0 | 2 | 0 - 3 |
| 1 | 3 | 0 - 3 |
| 2-15 | Reserved | Reserved |

FIG. 23

| Value | Number of DMRS CDM group(s) without data | DMRS port(s) | Number of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 3 | 0 | 1 |
| 7 | 3 | 1 | 1 |
| 8 | 3 | 2 | 1 |
| 9 | 3 | 3 | 1 |
| 10 | 3 | 4 | 1 |
| 11 | 3 | 5 | 1 |
| 12 | 3 | 0 | 2 |
| 13 | 3 | 1 | 2 |
| 14 | 3 | 2 | 2 |
| 15 | 3 | 3 | 2 |
| 16 | 3 | 4 | 2 |
| 17 | 3 | 5 | 2 |
| 18 | 3 | 6 | 2 |
| 19 | 3 | 7 | 2 |
| 20 | 3 | 8 | 2 |
| 21 | 3 | 9 | 2 |
| 22 | 3 | 10 | 2 |
| 23 | 3 | 11 | 2 |
| 24 | 1 | 0 | 2 |
| 25 | 1 | 1 | 2 |
| 26 | 1 | 6 | 2 |
| 27 | 1 | 7 | 2 |
| 28-31 | Reserved | Reserved | Reserved |

FIG. 24

| Value | Number of DMRS CDM group(s) without data | DMRS port(s) | Number of front-load symbols |
|---|---|---|---|
| 0 | 1 | 0 , 1 | 1 |
| 1 | 2 | 0 , 1 | 1 |
| 2 | 2 | 2 , 3 | 1 |
| 3 | 3 | 0 , 1 | 1 |
| 4 | 3 | 2 , 3 | 1 |
| 5 | 3 | 4 , 5 | 1 |
| 6 | 2 | 0 , 2 | 1 |
| 7 | 3 | 0 , 1 | 2 |
| 8 | 3 | 2 , 3 | 2 |
| 9 | 3 | 4 , 5 | 2 |
| 10 | 3 | 6 , 7 | 2 |
| 11 | 3 | 8 ,9 | 2 |
| 12 | 3 | 10 , 11 | 2 |
| 13 | 1 | 0 , 1 | 2 |
| 14 | 1 | 6 , 7 | 2 |
| 15 | 2 | 0 , 1 | 2 |
| 16 | 2 | 2 , 3 | 2 |
| 17 | 2 | 6 , 7 | 2 |
| 18 | 2 | 8 , 9 | 2 |
| 19-31 | Reserved | Reserved | Reserved |

FIG. 25

EP 4 542 945 A1

| Value | Number of DMRS CDM group(s) without data | DMRS port(s) | Number of front-load symbols |
|---|---|---|---|
| 0 | 2 | 0 - 2 | 1 |
| 1 | 3 | 0 - 2 | 1 |
| 2 | 3 | 3 - 5 | 1 |
| 3 | 3 | 0 , 1 , 6 | 2 |
| 4 | 3 | 2 , 3 , 8 | 2 |
| 5 | 3 | 4 , 5 , 10 | 2 |
| 6-31 | Reserved | Reserved | Reserved |

FIG. 26

| Value | Number of DMRS CDM group(s) without data | DMRS port(s) | Number of front-load symbols |
|-------|------------------------------------------|--------------|------------------------------|
| 0 | 2 | 0 - 3 | 1 |
| 1 | 3 | 0 - 3 | 1 |
| 2 | 3 | 0 , 1 , 6 , 7 | 2 |
| 3 | 3 | 2 , 3 , 8 , 9 | 2 |
| 4 | 3 | 4 , 5 , 10, 11 | 2 |
| 5-31 | Reserved | Reserved | Reserved |

FIG. 27

FIG. 28

EP 4 542 945 A1

FIG. 29

200

FIG. 30

FIG. 31

FIG. 32

EP 4 542 945 A1

FIG. 33

# Enhanced Mobile Broadband

Gigabytes in a second

3D video, UHD screens

Work and play in the cloud

Smart Home/Building

Augmented reality

Mission critical application e.g. e-health

Smart City

Industry automation

Self Driving Car

**Massive Machine Type Communication**

**Ultra-reliable and Low Latency Communication**

FIG. 34

EP 4 542 945 A1

FIG. 35

EP 4 542 945 A1

100

FIG. 36

200

FIG. 37

| MCS Index IMCS | Modulation Order Qm | Target code Rate Rx[1024] | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 434 | 1.6953 |
| 7 | 4 | 490 | 1.9141 |
| 8 | 4 | 553 | 2.1602 |
| 9 | 4 | 616 | 2.4063 |
| 10 | 4 | 658 | 2.5703 |
| 11 | 6 | 466 | 2.7305 |
| 12 | 6 | 517 | 3.0293 |
| 13 | 6 | 567 | 3.3223 |
| 14 | 6 | 616 | 3.6094 |
| 15 | 6 | 666 | 3.9023 |
| 16 | 6 | 719 | 4.2129 |
| 17 | 6 | 772 | 4.5234 |
| 18 | 6 | 822 | 4.8164 |
| 19 | 6 | 873 | 5.1152 |
| 20 | 8 | 682.5 | 5.3320 |
| 21 | 8 | 711 | 5.5547 |
| 22 | 8 | 754 | 5.8906 |
| 23 | 8 | 797 | 6.2266 |
| 24 | 8 | 841 | 6.5703 |
| 25 | 8 | 885 | 6.9141 |
| 26 | 8 | 916.5 | 7.1602 |
| 27 | 8 | 948 | 7.4063 |
| 28 | 2 | Reserved | |
| 29 | 4 | Reserved | |
| 30 | 6 | Reserved | |
| 31 | 8 | Reserved | |

FIG. 38

| MCS Index IMCS | Modulation Order Qm | Target code Rate Rx[1024] | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | Reserved | |
| 30 | 4 | Reserved | |
| 31 | 6 | Reserved | |

FIG. 39

# INTERNATIONAL SEARCH REPORT

| International application No. |
| --- |
| **PCT/JP2023/021793** |

**A.  CLASSIFICATION OF SUBJECT MATTER**

*H04L 27/26*(2006.01)i; *H04B 7/0456*(2017.01)i; *H04W 28/06*(2009.01)i; *H04W 28/18*(2009.01)i; *H04W 72/02*(2009.01)i; *H04W 72/20*(2023.01)i

FI:   H04L27/26 113; H04B7/0456 100; H04L27/26 313; H04W28/06 110; H04W28/18 110; H04W72/02; H04W72/20

According to International Patent Classification (IPC) or to both national classification and IPC

**B.  FIELDS SEARCHED**

Minimum documentation searched (classification system followed by classification symbols)

H04L27/26; H04B7/0456; H04W28/06; H04W28/18; H04W72/02; H04W72/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| Y | Moderator (NTT DOCOMO, INC.), Summary on Rel-17 TEIs, 3GPP TSG RAN WG1 #106b-e R1-2109722, October 2021, pages 79-85<br>    section 2.12 | 1-3, 5-8, 11-17 |
| A | | 4, 9-10 |
| Y | JP 2019-220947 A (LG ELECTRONICS INC.) 26 December 2019 (2019-12-26)<br>    abstract, paragraphs [0227]-[0245], [0327]-[0329], [0343], [0344] | 1-3, 5-8, 11-17 |
| Y | WO 2020/262202 A1 (SHARP KABUSHIKI KAISHA) 30 December 2020 (2020-12-30)<br>    paragraphs [0047]-[0049], [0059]-[0065] | 1-3, 5-8, 11-17 |
| Y | US 2020/0162225 A1 (TELEFONAKTIEBOLAGET LM ERICSSON (PUBL)) 21 May 2020<br>(2020-05-21)<br>    paragraphs [0021]-[0039], [0072]-[0086] | 2-3, 5-8, 11-14 |
| P, X | WO 2023/012952 A1 (NTT DOCOMO, INC.) 09 February 2023 (2023-02-09)<br>    paragraphs [0022]-[0039], [0041], [0043]-[0057], [0069]-[0092], [0102]-[0115], fig. 1-6,<br>    17-19 | 1-3, 5-8, 11-17 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 August 2023** | **29 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
**Information on patent family members**

International application No.

**PCT/JP2023/021793**

| Patent document cited in search report | | | Publication date (day/month/year) | Patent family member(s) | | | Publication date (day/month/year) |
|---|---|---|---|---|---|---|---|
| JP | 2019-220947 | A | 26 December 2019 | US | 2019/0373588 | A1 | |
| | | | | abstract, paragraphs [0220]-[0239], [0315]-[0317], [0328], [0329] | | | |
| | | | | WO | 2019/216737 | A1 | |
| | | | | EP | 3567777 | A1 | |
| | | | | KR | 10-2019-0129772 | A | |
| | | | | CN | 111052646 | A | |
| WO | 2020/262202 | A1 | 30 December 2020 | US | 2022/0353711 | A1 | |
| | | | | CN | 114270766 | A | |
| US | 2020/0162225 | A1 | 21 May 2020 | WO | 2018/203821 | A1 | |
| | | | | CN | 110832802 | A | |
| WO | 2023/012952 | A1 | 09 February 2023 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022095920 A

- JP 2022158782 A

**Non-patent literature cited in the description**

- NR Base Station (BS) radio transmission and reception (Release 15). *3GPP TS38.104*, March 2021
- **CHINA TELECOM**. New WID on NR coverage enhancements. *RP-202928*, December 2020
- **CHINA TELECOM**. Revised WID on Further NR coverage enhancements. *RP-220937*, March 2022

- NR Physical channels and modulation (Release 17). *3GPP TS38.211*, March 2022
- NR Multiplexing and channel coding (Release 17). *3GPP TS38.212*, March 2022
- NR Physical layer procedures for control (Release 17). *3GPP TS38.213*, March 2022
- NR Physical layer procedures for data (Release 17). *3GPP TS38.214*, March 2022